# EUROPEAN PATENT SPECIFICATION

(11) **EP 3 783 517 B1**
(45) Date of publication and mention of the grant of the patent: **06.08.2025**
(21) Application number: 20178403.0
(22) Date of filing: 05.06.2020
(51) Int. Cl.: G06F 21/60, G06F 21/85, G06F 13/28, G06F 21/64, H04L 9/08, H04L 9/06

(54) **INTEGRITY AND DATA ENCRYPTION (IDE) OVER COMPUTER BUSES**
INTEGRITÄT UND DATENVERSCHLÜSSELUNG (ID) ÜBER RECHNERBUSSE
INTÉGRITÉ ET CHIFFREMENT DE DONNÉES (IDE) SUR DES BUS INFORMATIQUES

(30) Priority: 21.08.2019 US 201962889948 P; 10.01.2020 US 202016740373
(43) Date of publication of application: 24.02.2021
(73) Proprietor: INTEL Corporation, Santa Clara, CA 95054 (US)
(72) Inventor: Harriman, David J., Portland, OR Oregon 97210 (US); Makaram, Raghunandan, Northborough, MA Massachusetts 01532 (US); Schoinas, Ioannis T., Portland, OR Oregon 97205 (US); Shanbhogue, Vedvyas, Austin, TX Texas 78738 (US); Chhabra, Siddhartha, Portland, OR Oregon 97229 (US); Sood, Kapil, Portland, OR Oregon 97229 (US)
(74) Representative: Samson & Partner Patentanwälte mbB

(56) References cited:
- WO-A1-2017/014885
- US-A1- 2006 288 203
- US-A1- 2008 209 203

## Description

### CROSS REFERENCE TO RELATED APPLICATION

Pursuant to 35 U.S.C. § 119(e), this application claims the benefit of United States Provisional Patent Application Serial Number 62/889,948 filed on August 21, 2019 titled "Integrity and Data Encryption (IDE) Over Computer Buses".

### BACKGROUND

A computer system, or a platform, may include many components, such as a host including a central processing unit (CPU), memory, chipsets, and/or many other devices coupled together by a computer bus. A computer bus is a communication system that may transfer data between devices or components inside a computer, or between computers. A computing system or a platform may use various devices coupled to a computer bus extensively. A computer bus may include related hardware components (wire, optical fiber, etc.) and software, including communication protocols. There may be many kinds of computer bus, such as serial buses or parallel buses.

Advances in semi-conductor processing and logic design have permitted an increase in the amount of logic that may be present on integrated circuit devices. As a corollary, computer system configurations have evolved from a single circuit or multiple integrated circuits in a system to multiple cores, multiple hardware threads, and multiple logical processors present on individual integrated circuits, as well as other interfaces integrated within such processors. A processor or integrated circuit typically comprises a single physical processor die, where the processor die may include any number of cores, hardware threads, logical processors, interfaces, memory, controller hubs, etc. As the processing power grows along with the number of devices in a computing system, the communication between sockets and other devices becomes more critical. Accordingly, interconnects, have grown from more traditional multi-drop buses that primarily handled electrical communications to full blown interconnect architectures that facilitate fast communication. Unfortunately, as the demand for future processors to consume at even higher-rates increases, corresponding demand is placed on the capabilities of existing interconnect architectures. Interconnect architectures may be based on a variety of technologies, including Peripheral Component Interconnect Express (PCIe), Universal Serial Bus, and others.

US 2008/209203 A1 relates to a data encryption apparatus, a data decryption apparatus, a data encryption method, a data decryption method, and a data transfer controlling apparatus that are capable of encrypting and decrypting data for each channel by identifying a channel used to transfer the data, even when a data size as a unit for data transfer differs from a data size as a unit for crypto processing. For example, a crypt processor is connected to a host computer and a storage apparatus. Data from the host computer is transferred to the crypt processor via DMA (Direct Memory Access) to be encrypted and then stored in the storage apparatus. The crypto processor acquires a descriptor defining a DMA number for identifying a DMA channel used to DMA-transfer the data. The crypto processor stores therein, based on the DMA number included in the acquired descriptor, the data transferred using the same DMA channel in units of a data size specified in a data bus. The crypto processor then encrypts the stored data in units of data size specified in a crypt system, and transfers the encrypted data to the storage apparatus.

US 2006/288203 A1 relates to an information processing apparatus such as a computer and a method of controlling operations of the apparatus. For example, an information processing apparatus comprises a Root Complex and a graphics controller (End Point). Packet data transmitted and received between the Root Complex and the graphics controller (End Point) are monitored. If it is determined that the packet data are TLP, the packet data are encrypted and decrypted by encryption and decryption circuits and then transmitted and received.

WO 2017/014885 A1 relates to technologies for cryptographic protection of I/O data include a computing device with one or more I/O controllers. Each I/O controller is coupled to one or more I/O devices. Each I/O controller generates a direct memory access (DMA) transaction that includes a channel identifier that is indicative of the I/O controller and that is indicative of an I/O device coupled to the I/O controller. The computing device intercepts the DMA transaction and determines whether to protect the DMA transaction as a function of the channel identifier. If so, the computing device performs a cryptographic operation using an encryption key associated with the channel identifier. The computing device includes a cryptographic engine that intercepts the DMA transaction and determines whether to protect the DMA transaction by determining whether the channel identifier matches an entry in a channel identifier table of the cryptographic engine.

### SUMMARY

The present invention is defined in the independent claims. The dependent claims define embodiments thereof.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
FIG. 1 illustrates an embodiment of a computing system including an interconnect architecture.
FIG. 2 illustrates an embodiment of an interconnect architecture including a layered protocol stack.
FIG. 3 illustrates an embodiment of a request or packet to be generated or received within an interconnect architecture.
FIG. 4 illustrates an embodiment of a transmitter and receiver pair for an interconnect architecture.
FIGS. 5A and 5B are simplified block diagrams illustrating hop-by-hop and end-to-end encryption, respectively, in a Peripheral Component Interconnect Express (PCle) system architecture.
FIG. 6A is a block diagram illustrating an example connected system showing secure stream and secure links in accordance with embodiments of the present disclosure.
FIG. 6B is a block diagram illustrating a system with sockets for a secure stream protocol according to at least one embodiment.
FIG. 6C is a simplified block diagram illustrating a system implementing an end-to-end secure stream protocol according to at least one embodiment.
FIG. 7 illustrates secure stream state machine, in accordance with various embodiments.
FIG. 8 illustrates Secure TLP Diagram, in accordance with various embodiments.
FIG. 9 illustrates a Secure TLP Prefix, in accordance with various embodiments.
FIG. 10 is a process flow diagram for forming a secure transaction layer packet for transmission across a secure stream in accordance with embodiments of the present disclosure.
FIG. 11 is an interaction diagram illustrating example counters and keys that may be used in a secure stream protocol according to at least one embodiment.
FIG. 12 illustrates a possible format of a TLP secure stream prefix that may be carried by each transaction according to at least one embodiment.
FIGS. 13-15 are interaction diagrams illustrating possible transactions in a secure stream protocol operating in restricted ordering mode using three streams according to at least one embodiment.
FIGS. 16A-C are schematic diagrams illustrating allowed and forbidden requests reordering in accordance with embodiments of the present disclosure.
FIG. 17 is a schematic diagram of an example integrity sync message for a secure link in accordance with embodiments of the present disclosure.
FIG. 18 is a schematic diagram of an integrity sync message for a Selective secure stream in accordance with embodiments of the present disclosure.
FIG. 19 is a schematic diagram of an integrity check fail message for a secure link in accordance with embodiments of the present disclosure.
FIG. 20 is a schematic diagram of an integrity check fail message for a Selective secure stream in accordance with embodiments of the present disclosure.
FIG. 21 is a schematic diagram of an example secure stream requester identifier (RID) association block in accordance with embodiments of the present disclosure.
FIG. 22 is a schematic diagram of an example secure stream address association block in accordance with embodiments of the present disclosure.
FIG. 23 illustrates an example device suitable for use to practice various aspects of the present disclosure, in accordance with various embodiments.
FIG. 24 illustrates an example computer-readable non-transitory storage medium that may be suitable for use to store instructions that cause an apparatus, in response to execution of the instructions by the apparatus, to practice selected aspects of the present disclosure.
FIG. 25 is a block diagram that illustrates another embodiment of a computing system including a processor according to one or more embodiments.
FIG. 26 is a block diagram of an example computer architecture according to at least one embodiment of the present disclosure according to one or more embodiments.

### DETAILED DESCRIPTION

The present disclosure provides various possible embodiments, or examples, of systems, methods, architectures, and apparatuses for implementing integrity and/or data encryption (IDE) for interconnect security, such as peripheral component interface express (PCle) encryption. The disclosure, for ease of understanding, is described in the context of an extension to PCle protocol to secure the PCle links between a device or endpoint and a System-on-chip (SOC). However, the disclosure is not limited to PCle systems and may be practiced with or adapted for other interconnects.

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. For example, specific details may include specific types of processors and system configurations, specific hardware structures, specific architectural and micro architectural details, specific register configurations, specific instruction types, specific system components, specific measurements/heights, specific processor pipeline stages and operation etc. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

Various operations will be described as multiple discrete operations, in turn, in a manner that is most helpful in understanding the illustrative embodiments; however, the order of description should not be construed as to imply that these operations are necessarily order dependent. In particular, these operations may not be performed in the order of presentation.

The phrase "A and/or B" means (A), (B), or (A and B). The phrases "A/B" and "A or B" mean (A), (B), or (A and B), similar to the phrase "A and/or B." For the purposes of the present disclosure, the phrase "at least one of A and B" means at least one (A), at least one (B), or (at least one A and at least one B). The description may use the phrases "in an embodiment," "in embodiments," "in at least one embodiment," "in one or more embodiments," "in some embodiments," and/or "in various embodiments," which may each refer to one or more of the same or different embodiments. Furthermore, the terms "comprising," "including," "having," and the like, as used with respect to embodiments of the present disclosure, are synonymous.

Example embodiments may be described as a process depicted as a flow chart, a flow diagram, a data flow diagram, a structure diagram, or a block diagram. Although a flow chart may describe the operations as a sequential process, many of the operations may be performed in parallel, concurrently, or simultaneously. In addition, the order of the operations may be re-arranged. A process may be terminated when its operations are completed but may also have additional steps not included in the figure(s). A process may correspond to a method, a function, a procedure, a subroutine, a subprogram, and the like. When a process corresponds to a function, its termination may correspond to a return of the function to the calling function and/or the main function.

Embodiments may be described in the general context of computer-executable instructions, such as program code, software modules, and/or functional processes, being executed by one or more of the aforementioned circuitry. The program code, software modules, and/or functional processes may include routines, programs, objects, components, data structures, etc., that perform particular tasks or implement particular data types. The program code, software modules, and/or functional processes discussed herein may be implemented using existing hardware in existing communication networks. For example, program code, software modules, and/or functional processes discussed herein may be implemented using existing hardware at existing network elements or control nodes.

As used herein, the term "circuitry" refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD), (for example, a field-programmable gate array (FPGA), a programmable logic device (PLD), a complex PLD (CPLD), a high-capacity PLD (HCPLD), a structured ASIC, or a programmable System on Chip (SoC)), digital signal processors (DSPs), etc., that are configured to provide the described functionality. In some embodiments, the circuitry may execute one or more software or firmware programs to provide at least some of the described functionality.

As used herein, the term "processor circuitry" may refer to, is part of, or includes circuitry capable of sequentially and automatically carrying out a sequence of arithmetic or logical operations; recording, storing, and/or transferring digital data. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. As used herein, the term "interface circuitry" may refer to, is part of, or includes circuitry providing for the exchange of information between two or more components or devices. The term "interface circuitry" may refer to one or more hardware interfaces (for example, buses, input/output (I/O) interfaces, peripheral component interfaces, network interface cards, and/or the like). As used herein, the terms "instantiate," "instantiation," and the like may refer to the creation of an instance, and an "instance" may refer to a concrete occurrence of an object, which may occur, for example, during execution of program code.

As used herein, the term "computer device" may describe any physical hardware device capable of sequentially and automatically carrying out a sequence of arithmetic or logical operations, equipped to record/store data on a machine readable medium, and transmit and receive data from one or more other devices in a communications network. A computer device may be considered synonymous to, and may hereafter be occasionally referred to, as a computer, computing platform, computing device, etc. The term "computer system" may include any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources. As used herein, the term "user equipment" or "UE" may refer to a device, such as a computer device, with radio communication capabilities and may describe a remote user of network resources in a communications network. The term "user equipment" or "UE" may be considered synonymous to, and may hereafter be occasionally referred to as client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc.

Examples of "computer devices", "computer systems", "UEs", etc. may include cellular phones or smart phones, feature phones, tablet personal computers, wearable computing devices, an autonomous sensors, laptop computers, desktop personal computers, video game consoles, digital media players, handheld messaging devices, personal data assistants, an electronic book readers, augmented reality devices, server computer devices (e.g., stand-alone, rack-mounted, blade, etc.), cloud computing services/systems, network elements, in-vehicle infotainment (IVI), in-car entertainment (ICE) devices, an Instrument Cluster (IC), head-up display (HUD) devices, onboard diagnostic (OBD) devices, dashtop mobile equipment (DME), mobile data terminals (MDTs), Electronic Engine Management System (EEMS), electronic/engine control units (ECUs), electronic/engine control modules, embedded systems, microcontrollers, control modules, engine management systems (EMS), networked or "smart" appliances, machine-type communications (MTC) devices, machine-to-machine (M2M), Internet of Things (IoT) devices, and/or any other like electronic devices. Moreover, the term "vehicle-embedded computer device" may refer to any computer device and/or computer system physically mounted on, built in, or otherwise embedded in a vehicle.

A computing system or a platform may use various devices coupled to a computer bus extensively. A computer bus may include related hardware components (e.g., wire, optical fiber, etc.) and software, including communication protocols. A peripheral component interconnect (PCI) bus or a PCI Express (PCle, PCI-E) may be a computer bus based on a specification that provides a mechanism for system software, or a system driver, to perform various operations related to the configuration of a device coupled to the PCI bus or the PCle bus. Devices, or components coupled to a computer bus may also be referred to as functions. PCle may operate in consumer, server, and industrial applications, as a motherboard-level interconnect (to link motherboard-mounted peripherals), a passive backplane interconnect, and as an expansion card interface for add-in boards. PCle devices communicate via a logical connection called an interconnect or link. A link is a point-to-point communication channel between two PCle ports allowing both of them to send and receive ordinary PCI requests, e.g., configuration, input/output (I/O), or memory read/write, and interrupts. At the physical level, a link may be composed of one or more lanes. Low-speed peripherals, such as an 802.11 Wi-Fi card, use a single-lane (×1) link, while a graphics adapter typically uses a much wider and faster 16-lane link.

Although the following embodiments may be described with reference to a secure stream protocol in integrated circuits, such as in computing platforms or microprocessors, other embodiments are applicable to other types of integrated circuits and logic devices. Similar techniques and teachings of embodiments described herein may be applied to other types of circuits or semiconductor devices that may also benefit from a secure stream protocol. For example, the disclosed embodiments are not limited to desktop computer systems or Ultrabooks^{™}. And may be also used in other devices, such as handheld devices, tablets, other thin notebooks, systems on a chip (SOC) devices, and embedded applications. Some examples of handheld devices include cellular phones, Internet protocol devices, digital cameras, personal digital assistants (PDAs), and handheld PCs. Embedded applications typically include a microcontroller, a digital signal processor (DSP), a system on a chip, network computers (NetPC), set-top boxes, network hubs, wide area network (WAN) switches, or any other system that can perform the functions and operations taught below. Moreover, the apparatus', methods, and systems described herein are not limited to physical computing devices, but may also relate to software optimizations for energy conservation and efficiency. As will become readily apparent in the description below, the embodiments of methods, apparatuses, and systems described herein (whether in reference to hardware, firmware, software, or a combination thereof) are vital to a 'green technology' future balanced with performance considerations.

As computing systems are advancing, the components therein are becoming more complex. As a result, the interconnect architecture to couple and communicate between the components is also increasing in complexity to ensure bandwidth requirements are met for optimal component operation. Furthermore, different market segments demand different aspects of interconnect architectures to suit the market's needs. For example, servers require higher performance, while the mobile ecosystem is sometimes able to sacrifice overall performance for power savings. Yet, it's a singular purpose of most fabrics to provide highest possible performance with maximum power saving. Below, a number of interconnects are discussed, which would potentially benefit from aspects of the embodiments described herein.

One interconnect fabric architecture includes the Peripheral Component Interconnect (PCI) Express (PCle) architecture. A primary goal of PCle is to enable components and devices from different vendors to inter-operate in an open architecture, spanning multiple market segments; clients (desktops and mobile), servers (standard, rack scale, and enterprise), and embedded and communication devices. PCI Express is a high performance, general purpose I/O interconnect defined for a wide variety of future computing and communication platforms. Some PCI attributes, such as its usage model, load-store architecture, and software interfaces, have been maintained through its revisions, whereas previous parallel bus implementations have been replaced by a highly scalable, fully serial interface. The more recent versions of PCI Express take advantage of advances in point-to-point interconnects, switch-based technology, and packetized protocol to deliver new levels of performance and features. Power management, quality of service (QoS), hot-plug/hot-swap support, data integrity, and error handling are among some of the advanced features supported by PCI Express.

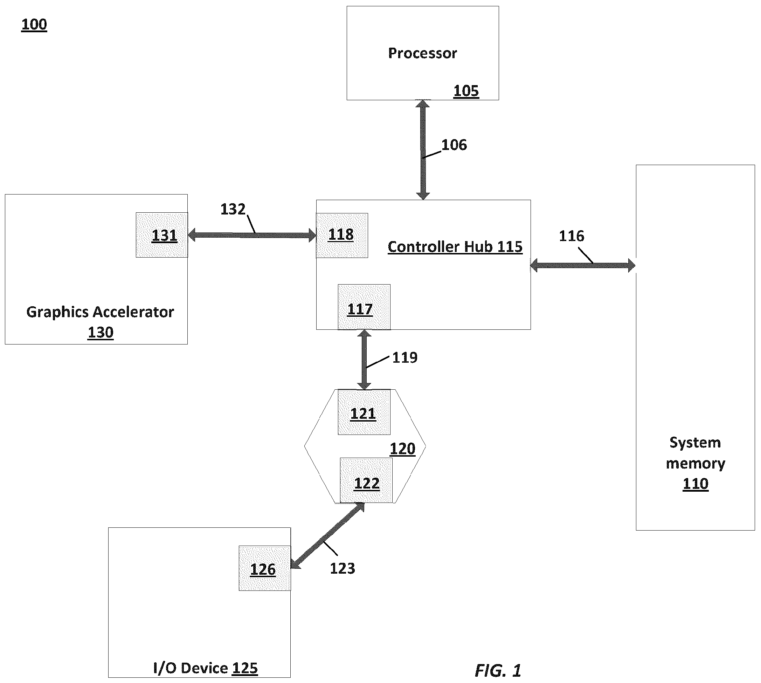

Referring to FIG. 1, an embodiment of a fabric composed of point-to-point links that interconnect a set of components is illustrated. A system 100 includes processor 105 and system memory 110 coupled to controller hub 115. Processor 105 includes any processing element, such as a microprocessor, a host processor, an embedded processor, a co-processor, or other processor. Processor 105 is coupled to controller hub 115 through front-side bus (FSB) 106. In one embodiment, FSB 106 is a serial point-to-point interconnect as described below. In another embodiment, link 106 includes a serial, differential interconnect architecture that is compliant with different interconnect standard.

System memory 110 includes any memory device, such as random access memory (RAM), non-volatile (NV) memory, or other memory accessible by devices in system 100. System memory 110 is coupled to controller hub 115 through memory interface 116. Examples of a memory interface include a double-data rate (DDR) memory interface, a dual-channel DDR memory interface, and a dynamic RAM (DRAM) memory interface.

In one embodiment, controller hub 115 is a root hub, root complex, or root controller in a Peripheral Component Interconnect Express (PCle or PCIE) interconnection hierarchy. Examples of controller hub 115 include a chipset, a memory controller hub (MCH), a northbridge, an interconnect controller hub (ICH) a southbridge, and a root controller/hub. Often the term chipset refers to two physically separate controller hubs, i.e. a memory controller hub (MCH) coupled to an interconnect controller hub (ICH). Note that current systems often include the MCH integrated with processor 105, while controller hub 115 is to communicate with I/O devices, in a similar manner as described below. In some embodiments, peer-to-peer routing is optionally supported through root complex 115.

Here, controller hub 115 is coupled to switch/bridge 120 through serial link 119. Input/output modules 117 and 121, which may also be referred to as interfaces/ports 117 and 121, include/implement a layered protocol stack to provide communication between controller hub 115 and switch 120. In one embodiment, multiple devices are capable of being coupled to switch 120.

Switch/bridge 120 routes packets/messages from device 125 upstream, i.e. up a hierarchy towards a root complex, to controller hub 115 and downstream, i.e. down a hierarchy away from a root controller, from processor 105 or system memory 110 to device 125. Switch 120, in one embodiment, is referred to as a logical assembly of multiple virtual PCI-to-PCI bridge devices. Device 125 includes any internal or external device or component to be coupled to an electronic system, such as an I/O device, a Network Interface Controller (NIC), an add-in card, an audio processor, a network processor, a hard-drive, a storage device, a CD/DVD ROM, a monitor, a printer, a mouse, a keyboard, a router, a portable storage device, a Firewire device, a Universal Serial Bus (USB) device, a scanner, and other input/output devices. Often in the PCle vernacular, a device is referred to as an endpoint. Although not specifically shown, device 125 may include a PCle to PCI/PCI-X bridge to support legacy or other version PCI devices. Endpoint devices in PCle are often classified as legacy, PCle, or root complex integrated endpoints.

Graphics accelerator 130 is also coupled to controller hub 115 through serial link 132. In one embodiment, graphics accelerator 130 is coupled to an MCH, which is coupled to an ICH. Switch 120, and accordingly I/O device 125, is then coupled to the ICH. I/O modules 131 and 118 are also to implement a layered protocol stack to communicate between graphics accelerator 130 and controller hub 115. Similar to the MCH discussion above, a graphics controller or the graphics accelerator 130 itself may be integrated in processor 105.

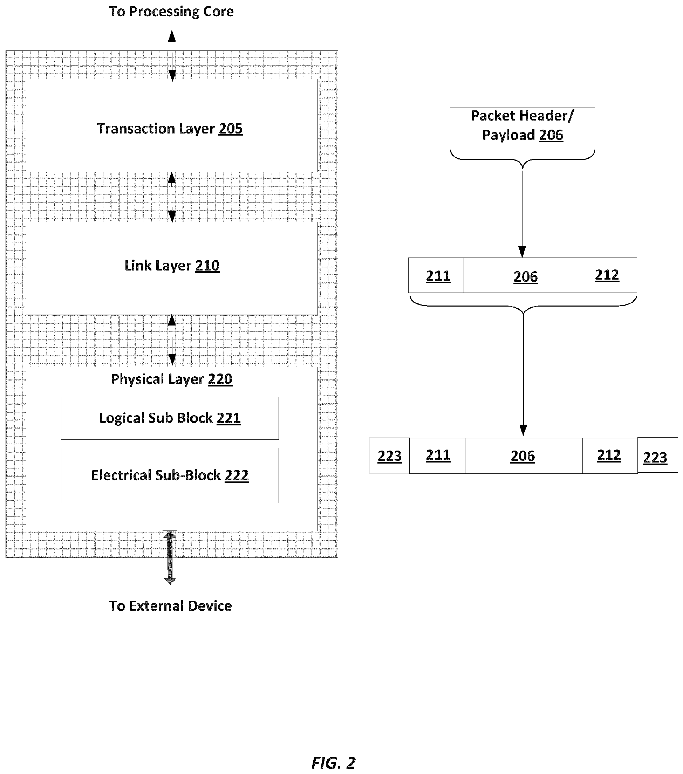

Turning to FIG. 2 an embodiment of a layered protocol stack is illustrated, which may be implemented in one or more components of a mobile computing device, such as an application processor or baseband processor or modem, among other examples. Layered protocol stack 200 includes logic implemented in hardware circuitry and/or software to implement any form of a layered communication stack, such as a Quick Path Interconnect (QPI) stack, a PCle stack, a next generation high performance computing interconnect stack, or other layered stack. Although the discussion immediately below in reference to FIGS. 2-4 are in relation to a PCle stack, similar concepts may be applied to other interconnect stacks, such as OpenCAPI^{™}, Gen-Z^{™}, UPI, Universal Serial Bus, (USB), Cache Coherent Interconnect for Accelerators (CCIX^{™}), Advanced Micro Device^{™}'s (AMD^{™}) Infinity^{™}, Common Communication Interface (CCI), or Qualcomm^{™}'s Centriq^{™} interconnect, among others. In one embodiment, protocol stack 200 is a PCle protocol stack including transaction layer 205, link layer 210 (also referred to herein as 'data link layer'), and physical layer 220. An interface, such as interfaces 117, 118, 121, 122, 126, and 131 in FIG. 1, may be represented as communication protocol stack 200. Representation as a communication protocol stack may also be referred to as a module or interface implementing/including a protocol stack.

PCI Express uses packets to communicate information between components. Packets are formed in the transaction layer 205 and data link layer 210 to carry the information from the transmitting component to the receiving component. As the transmitted packets flow through the other layers, they are extended with additional information necessary to handle packets at those layers. At the receiving side the reverse process occurs, and packets get transformed from their physical layer 220 representation to the data link layer 210 representation and finally (for transaction layer packets) to the form that can be processed by the transaction layer 205 of the receiving device.

### Transaction Layer

In one embodiment, transaction layer 205 is to provide an interface between a device's processing core and the interconnect architecture, such as data link layer 210 and physical layer 220. In this regard, a primary responsibility of the transaction layer 205 is the assembly and disassembly of packets (i.e., transaction layer packets, or TLPs). The transaction layer 205 typically manages credit-based flow control for TLPs. PCle implements split transactions, i.e. transactions with request and response separated by time, allowing a link to carry other traffic while the target device gathers data for the response.

In addition, PCle utilizes credit-based flow control. In this scheme, a device advertises an initial amount of credit for each of the receive buffers in transaction layer 205. An external device at the opposite end of the link, such as controller hub 115 in FIG. 1, counts the number of credits consumed by each TLP. A transaction may be transmitted if the transaction does not exceed a credit limit. Upon receiving a response an amount of credit is restored. An advantage of a credit scheme is that the latency of credit return does not affect performance, provided that the credit limit is not encountered.

In one embodiment, four transaction address spaces include a memory address space, a configuration address space, a message address space, and an input/output address space. Memory space transactions include one or more of read requests and write requests to transfer data to/from a memory-mapped location. In one embodiment, memory space transactions are capable of using two different address formats, e.g., a short address format, such as a 32-bit address, or a long address format, such as 64-bit address. Configuration space transactions are used to access configuration space of the PCle devices. Transactions to the configuration space include read requests and write requests. Message space transactions (or, simply messages) are defined to support in-band communication between PCle agents.

Therefore, in one embodiment, transaction layer 205 assembles packet header/payload 206. Format for current packet headers/payloads may be found in the PCle specification at the PCle specification website.

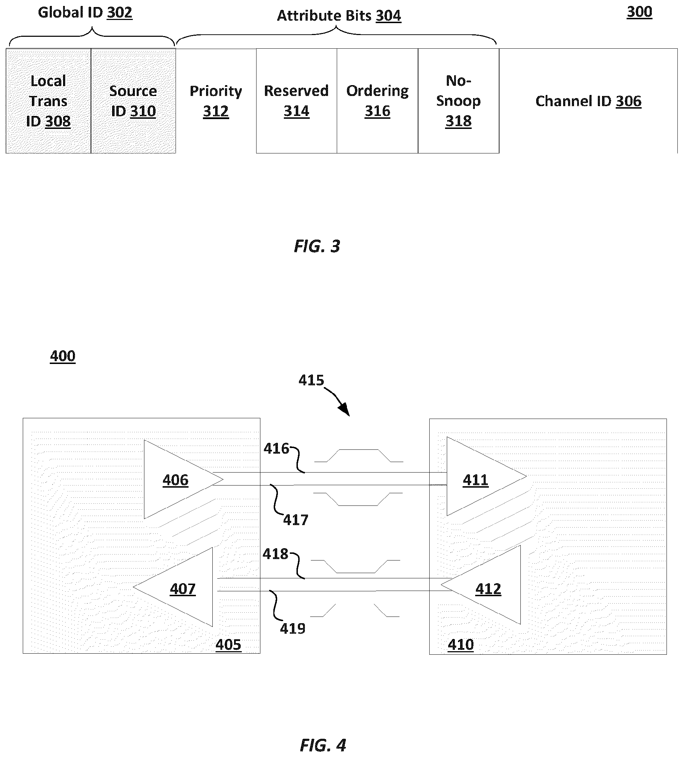

Quickly referring to FIG. 3, an embodiment of a PCle transaction descriptor is illustrated. In one embodiment, transaction descriptor 300 is a mechanism for carrying transaction information. In this regard, transaction descriptor 300 supports identification of transactions in a system. Other potential uses include tracking modifications of default transaction ordering and association of transaction with channels.

Transaction descriptor 300 includes global identifier field 302, attributes field 304 and channel identifier field 306. In the illustrated example, global identifier field 302 is depicted comprising local transaction identifier field 308 and source identifier field 310. In one embodiment, global identifier field 302 is unique for all outstanding requests.

According to one implementation, local transaction identifier field 308 is a field generated by a requesting agent, and it is unique for all outstanding requests that require a completion for that requesting agent. Furthermore, in this example, source identifier 310 uniquely identifies the requestor agent within a PCle hierarchy. Accordingly, together with source ID 310, local transaction identifier 308 field provides global identification of a transaction within a hierarchy domain.

Attributes field 304 specifies characteristics and relationships of the transaction. In this regard, attributes field 304 is potentially used to provide additional information that allows modification of the default handling of transactions. In one embodiment, attributes field 304 includes priority field 312, reserved field 314, ordering field 316, and no-snoop field 318. Here, priority sub-field 312 may be modified by an initiator to assign a priority to the transaction. Reserved attribute field 314 is left reserved for future, or vendor-defined usage. Possible usage models using priority or security attributes may be implemented using the reserved attribute field.

In this example, ordering attribute field 316 is used to supply optional information conveying the type of ordering that may modify default ordering rules. According to one example implementation, an ordering attribute of "0" denotes default ordering rules are to apply, wherein an ordering attribute of "1" denotes relaxed ordering, wherein writes can pass writes in the same direction, and read completions can pass writes in the same direction. Snoop attribute field 318 is utilized to determine if transactions are snooped. As shown, channel ID Field 306 identifies a channel that a transaction is associated with.

### Link Layer

With reference again to FIG. 2, link layer 210, also referred to as data link layer 210, acts as an intermediate stage between transaction layer 205 and the physical layer 220. In one embodiment, a responsibility of the data link layer 210 is providing a reliable mechanism for exchanging Transaction Layer Packets (TLPs) between two components of a link. One side of the Data Link Layer 210 accepts TLPs assembled by the Transaction Layer 205, applies packet sequence identifier 211, i.e. an identification number or packet number, calculates and applies an error detection code, i.e. CRC 212, and submits the modified TLPs to the Physical Layer 220 for transmission across a physical to an external device.

### Physical Layer

In one embodiment, physical layer 220 includes logical sub-block 221 and electrical sub-block 222 to physically transmit a packet to an external device. Here, logical sub-block 221 is responsible for the "digital" functions of physical layer 220. In this regard, the logical sub-block includes a transmit section to prepare outgoing information for transmission by electrical sub-block 222, and a receiver section to identify and prepare received information before passing it to the link layer 210.

Physical layer 220 includes a transmitter and a receiver. The transmitter is supplied by logical sub-block 221 with symbols, which the transmitter serializes and transmits onto to an external device. The receiver is supplied with serialized symbols from an external device and transforms the received signals into a bit-stream. The bit-stream is de-serialized and supplied to logical sub-block 221. In one embodiment, an 8b/10b transmission code is employed, where ten-bit symbols are transmitted/received. In other embodiments 128b/130b transmission coding is used, among other examples. Here, special symbols are used to frame a packet with frames 223. In addition, in one example, the receiver also provides a symbol clock recovered from the incoming serial stream.

As stated above, although transaction layer 205, link layer 210, and physical layer 220 are discussed in reference to a specific embodiment of a PCle protocol stack, a layered protocol stack is not so limited. In fact, any layered protocol may be included/implemented. As an example, a port/interface that is represented as a layered protocol includes: (1) a first layer to assemble packets (i.e., a transaction layer); a second layer to sequence packets (i.e., a link layer); and a third layer to transmit the packets (i.e., a physical layer). As a specific example, a common standard interface (CSI) layered protocol is utilized.

Referring next to FIG. 4, an embodiment of a PCle serial point to point fabric is illustrated. Although an embodiment of a PCle serial point-to-point link is illustrated, a serial point-to-point link is not so limited, as it includes any transmission path for transmitting serial data. In the embodiment shown, a basic PCle link includes two, low-voltage, differentially driven signal pairs: a transmit pair 406/411 and a receive pair 412/407. Accordingly, device 405 includes transmission logic 406 to transmit data to device 410 and receiving logic 407 to receive data from device 410. In other words, two transmitting paths (i.e., paths 416 and 417) and two receiving paths (i.e., paths 418 and 419) are included in a PCle link.

A transmission path refers to any path for transmitting data, such as a transmission line, a copper line, an optical line, a wireless communication channel, an infrared communication link, or other communication path. A connection between two devices, such as device 405 and device 410, is referred to as a link, such as link 415. A link may support one lane - each lane representing a set of differential signal pairs (one pair for transmission, one pair for reception). To scale bandwidth, a link may aggregate multiple lanes denoted by xN, where N is any supported link width, such as 1, 2, 4, 8, 12, 16, 32, 64, or wider.

A differential pair refers to two transmission paths, such as lines 416 and 417, to transmit differential signals. As an example, when line 416 toggles from a low voltage level to a high voltage level (i.e., a rising edge), line 417 drives from a high logic level to a low logic level (i.e., a falling edge). Differential signals potentially demonstrate better electrical characteristics, such as better signal integrity (i.e., cross-coupling), voltage overshoot/undershoot, ringing, etc. This allows for better timing window, which enables faster transmission frequencies.

Integrity & Data Encryption (IDE) provides confidentiality, integrity, and replay protection for TLPs. IDE flexibly supports a variety of use models while providing broad interoperability. The cryptographic mechanisms are aligned to current industry best practices. For example, AES-CTR 256b and GMAC 96b can be used for encryption and integrity, respectively; but implementations of cryptographic mechanisms can be extended as security requirements evolve.

The security model considers threats from physical attacks on Links, including cases where an adversary can examine data intended to be confidential, modify TLP contents, reorder and/or delete TLPs, using lab equipment, purpose-built interposers, or malicious Extension Devices. TLP traffic can be protected as it transits Switches, extending the security model to address threats from reprogramming Switch routing mechanisms or through malicious Switches.

IDE can be used to secure traffic within Trusted Execution Environments composed of multiple components - the frameworks for such composition are outside the scope of IDE.

Authentication and Key Exchange using Component Measurement and Authentication (CMA) via Data Object Exchange (DOE) are supported by Components designed to operate interoperably based on this specification alone, but IDE explicitly permits the use of component or platform specific mechanisms when interoperability is not required. Using CMA via DOE, System Firmware/Software can establish secure connections between components without device-specific knowledge.

IDE establishes a Secure Stream between two Ports. Secure Stream is described in more detail below. When there are no Switches between the Ports, it is possible to secure all (or selected) TLP traffic on the Link. For cases with and without Switches between the Ports, it is possible to secure selected TLP traffic.

IDE establishes three Sub-Streams of TLPs corresponding to the three Flow Control categories - Posted Requests, Non-Posted Requests, and Completions (in each traffic flow direction). Within each of these Sub-Streams, Switch reordering is constrained such that TLPs are maintained in-order between the two Ports.

### Secure Streams

For purposes of illustrating certain example techniques for using a secure stream protocol for a serial interconnect in accordance with embodiments disclosed herein, it is important to understand the activities that may be occurring in systems in which link encryption is used in trusted domain environments. Accordingly, the following foundational information may be viewed as a basis from which the present disclosure may be properly explained.

Some new CPU capabilities include trust domains that provide a virtual computing environment without a hypervisor in a trusted computing base (TCB). The hypervisor (or virtual machine manager (VMM)) is removed from the trusted computing base for virtual machines it manages. A virtual machine in this trusted domain can protect the confidentiality of its memory contents and runtime central processing unit (CPU) state from any other software, including the hosting VMM, unless explicitly shared by the trusted domain virtual machine itself. The memory may also be protected from the VMM and other trust domains by a memory controller using encryption, for example. Generally, trust domains do not allow devices that are connected via a serial interconnect interface to access the trust domain protected memory. These connected devices, however, typically need access to protected data to perform their intended functions.

Example use cases of a virtual computing environment where the hypervisor has been removed from a trusted computing base for virtual machines it manages, include cloud service providers that host many tenant virtual machine (VM) workloads. Both the cloud service provider (CSP) and the cloud tenant may desire confidentiality for the VM workload. The tenant VM may not trust the VMM or any of the software in the cloud data center. Thus, running a trust domain VM for which the hypervisor has been removed from the trust boundary, ensures that the VM cannot be attacked by the VMM or malicious users operating or otherwise accessing the data center. To achieve this confidential VM execution, the memory and the runtime CPU state have to be kept confidential and integrity-protected to prevent data exfiltration or tamper attacks. A new CPU security capability can meet these security objectives via the use of a memory controller utilizing memory encryption and integrity protection, such as Intel^{®} Multi-Key Total Memory Encryption (MK-TME).

A trust domain (TD) is a type of virtual machine guest that prevents attacks by running in a central processing unit (CPU) mode. Running in a CPU mode protects the confidentiality of its memory contents and runtime CPU state from any other software, including the hosting VMM, unless explicitly shared by the trust domain itself. The memory and runtime CPU state are isolated so that the memory is opaque and generally unmodifiable. To the extent that any modifications occur, those modifications can be detected.

Devices that are connected to a server platform in a cloud, however, are not trusted to access the memory of a trust domain. For a device connected to the server platform via a serial interconnect interface, such as peripheral component interface express (PCIe), enabling direct assignment of the device to TD memory requires the data flowing between the TD and the device over the PCle link to be secured to enforce confidentiality, integrity, and replay protection of the data. In particular, to allow direct memory access by a device, a TD needs 1) the ability to establish trust in the device such that the device is recognized as a trusted entity, 2) the ability to secure the connection between the server and the device so that the data that flows on the link is secure, and 3) the ability to enforce rules for producer-consumer ordering of transactions.

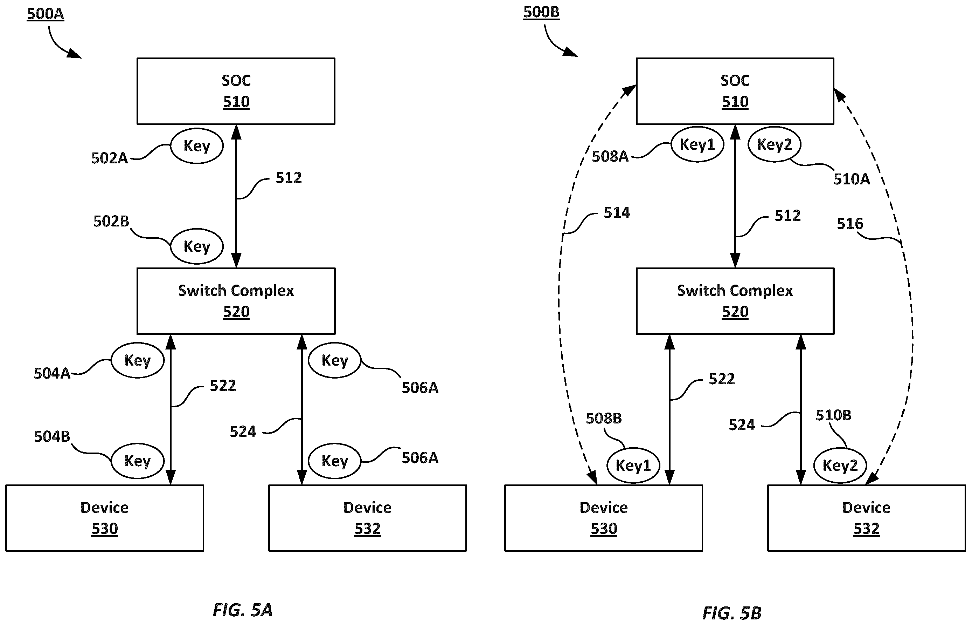

As shown in FIGS. 5A and 5B, encryption of transactions in PCle can be performed using a hop-by-hop protocol (FIG. 5A) or an end-to-end protocol (FIG. 5B). FIGS. 5A and 5B illustrate the distinction between hop-by-hop and end-to-end encryption in an interconnect architecture that includes example devices 530 and 532 connected to a PCle switch 520 via links 522 and 524, and the PCle switch 520 connected to a system on chip (SoC) 510 via a link 512. In FIG. 5A, a hop-by-hop protocol includes a different key pair for each link to enable encryption at every transmitting port and decryption at every receiving port. Keys 501A and 501B are used as the key pair of link 512, keys 503A and 503B are used as the key pair of link 522, and keys 505A and 505B are used as the key pair of link 524. Consequently, data flowing through a hop-by-hop network with one or more intermediate devices, such as PCle switch 520, gets encrypted and decrypted several times before it reaches its destination.

In an end-to-end protocol shown in FIG. 5B, different key pairs are provisioned for each end-to-end link 507 and 509. Keys are provided only at an initiating device and a target device. For example, keys 506A and 506B are used as the key pair for the end-to-end link 507, and keys 508A and 508B are used as the key pair for the end-to-end link 509. An initiating device encrypts data to be transmitted to a target device, the target device decrypts the data received from the initiating device, and intermediate devices simply route the encrypted transactions. For example, when SoC 510 sends data to device 530, SoC 510 is the initiating device and device 530 is the target device. Conversely, when device 530 sends data to SoC 510, device 530 is the initiating device and SoC 510 is the target device.

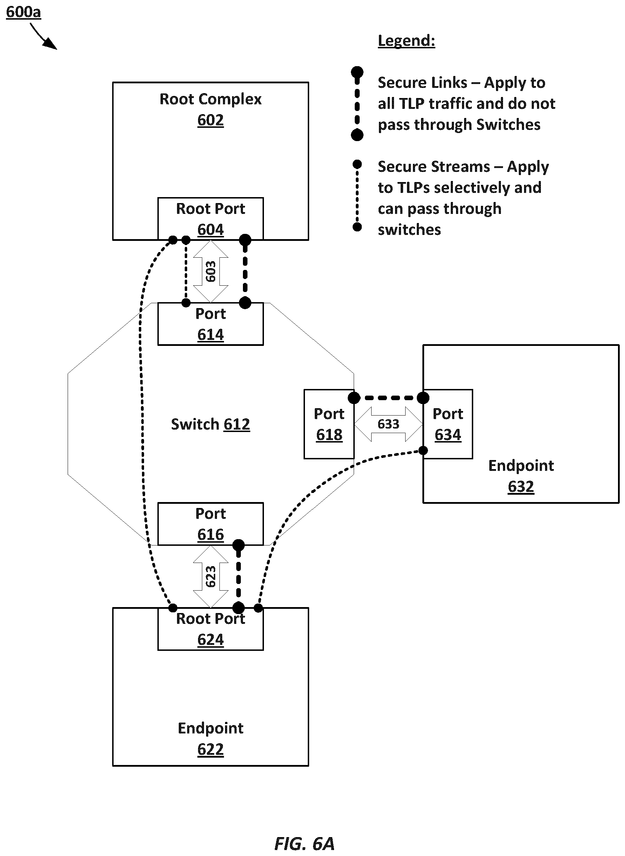

FIG. 6A is a block diagram illustrating an example connected system showing secure stream and secure links in accordance with embodiments of the present disclosure.

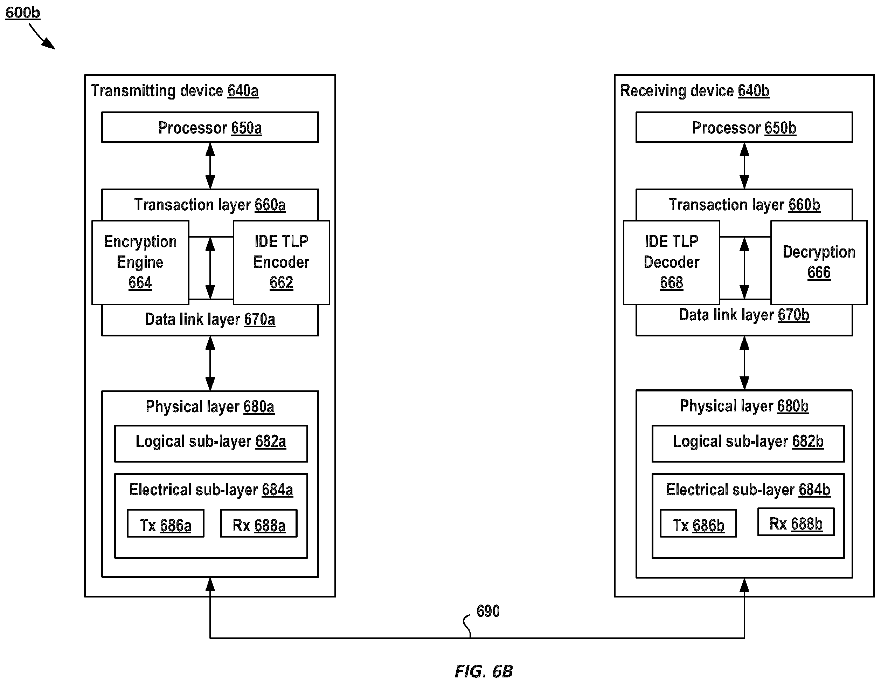

FIG. 6B is a block diagram illustrating a system 600b with sockets for a secure stream protocol according to at least one embodiment. The interconnect architecture includes an initiating device 640a and a target device 640b. As previously described herein, the layered protocol stacks include logic implemented in hardware circuitry and/or software to implement any form of a layered communication stack, such as a Quick Path Interconnect (QPI) stack, a PCle stack, a next generation high performance computing interconnect stack, or other layered stack. For ease of discussion, FIG. 6B and subsequent figures herein may be primarily described in relation to a PCle stack, although similar concepts may be applied to other interconnect stacks. In at least one embodiment, initiating device 640a and target device 640b each include a PCle stack, such as PCle protocol stack 200 described with reference to FIG. 2. The PCle stack in initiating device 640a includes a transaction layer 660, a link layer 670a, and a physical layer 680a. The PCle stack in target device 640b includes a transaction layer 6560b, a link layer 670b, and a physical layer 680b.

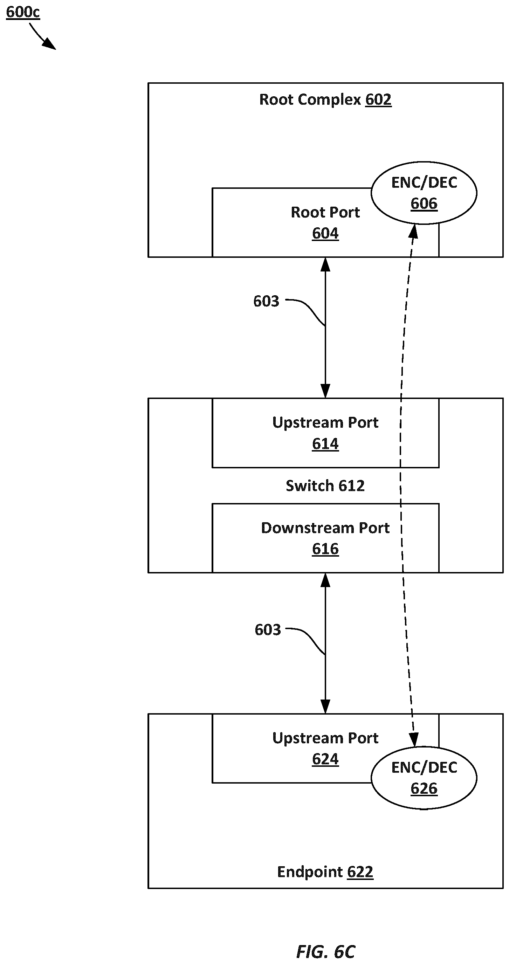

In at least one embodiment, initiating device 640a and target device 640b can secure a transaction layer packet according to a secure stream protocol. A transaction layer packet is also referred to herein as 'packet' and 'TLP'. As illustrated in FIG. 6C, sockets where secure stream processing occurs include a secure stream TLP insertion point (STX) between transaction layer 660a and link layer 670a of initiating device 640a, and a secure stream TLP detection point (SRX) between transaction layer 660b and link layer 670b of target device 640b.

In various embodiments, in the secure stream protocol (also referred to herein as "SEC-STREAM"), each transaction type (i.e., posted, non-posted, and completion) may be treated as a separate protected stream or as secured sub-streams. As used herein, a 'protected stream' or 'secure stream' is intended to represent one or more transactions of a particular transaction type (or combination of particular transaction types) that have been confidentiality, integrity, and replay protected based on the particular transaction type (or combination of transaction types). The data payload of a transaction is confidentiality, integrity, and replay protected. The metadata (e.g., TLP secure stream prefixes, TLP Headers) of a transaction is integrity and replay protected. In various embodiments, Advanced Encryption Standard - Galois/Counter Mode (AES-GCM) construction with 96-bit counters and a 96-bit Message Authentication Code (MAC) can be used for cryptographically securing the traffic. It should be noted, however, that this approach can work equally well with similar types of security schemes and is not limited to these specifics. For example, other cryptographic constructs that provide replay protection and integrity protection may be used instead. AES-CTR encryption and GMAC (and aggregated GMAC) can also be used. In other embodiments, larger AES-GCM construction and/or a larger MAC may be used.

Operationally, in at least one embodiment, a packet is formed in transaction layer 660a of initiating device 640a. The packet can include, but is not necessarily limited to, a header with routing information and payload data to be communicated to the target device. At IDE TLP 662 and encryption engine 664, before passing the packet to link layer 670a, data in the packet is encrypted, a TLP secure stream prefix can be generated, the prefix is inserted into the packet, an integrity code value (ICV) such as a MAC is generated over the packet (e.g., prefix, header, data), and the ICV is added to the packet. In some embodiments, IDE information can be included in the TLP header. The packet is passed onto the physical layer 680a. The packet is transmitted across the link 690. After the link layer 670b in target device 640b processes the received transaction, at IDE TLP decoder 668 and decryption engine 666, data in the packet is decrypted, the ICV is verified, and the TLP secure stream prefix is stripped from the packet before further processing by the transaction layer 660b. Hardware and/or software to perform secure stream processing at IDE TLP encoder logic 662 and IDE TLP decoder logic 668 may be integrated in their respective transaction layers 660a and 660b or may be implemented separately as sublayers between transaction layers 640a, 640b and link layers 670a, 670b.

The present disclosure defines two modes of operation for a secure stream protocol to address the issues related to relaxed ordering and read replays that may occur. The modes include a restricted ordering mode (ROM) and explicit counter mode (ECM).

FIG. 6C is a simplified block diagram of a PCle interconnect architecture 600c including a root complex 602 connected to an endpoint 622 via a PCle switch 612. Root complex 602 includes a root port 604, where encryption or decryption 606 is performed (depending on whether the root complex is the transmitter or receiver) for a TLP packet in an end-to-end (Selective) secured stream. Endpoint 622 includes an upstream port 624, where encryption or decryption 626 is performed (depending on whether the endpoint is the transmitter or receiver) on a TLP packet in an end-to-end (Selective) secured stream. PCle switch 612 includes an upstream port 614 connected to root port 602 via link 603, and a downstream port 616 connected to upstream port 624 of endpoint 622 via link 603. In a secured stream, transactions are not encrypted or decrypted at PCle switch 612. Instead, PCle switch 612 uses header data in the TLP packet to route the transaction. Root port 604 can perform encryption of the data payload of a packet when the root port 604 is the initiating device and can perform decryption of the data payload of the packet when it is the target device. Similarly, endpoint 622 can perform encryption of the data payload of a packet when the endpoint 622 is the initiating device and can perform decryption of the data payload of the packet when the endpoint 622 is the target device.

In embodiments, an IDE TLP encoder logic can reside at the transaction layer 660a for encoding transaction layer packets with TLP prefixes for IDE and for providing integrity protection. Likewise, an encryption engine can reside in the transaction layer 660 for encrypting the TLP data. The encryption engine and the IDE TLP encoder logic can include hardware circuitry, can in some embodiments, can reside on the same logic.

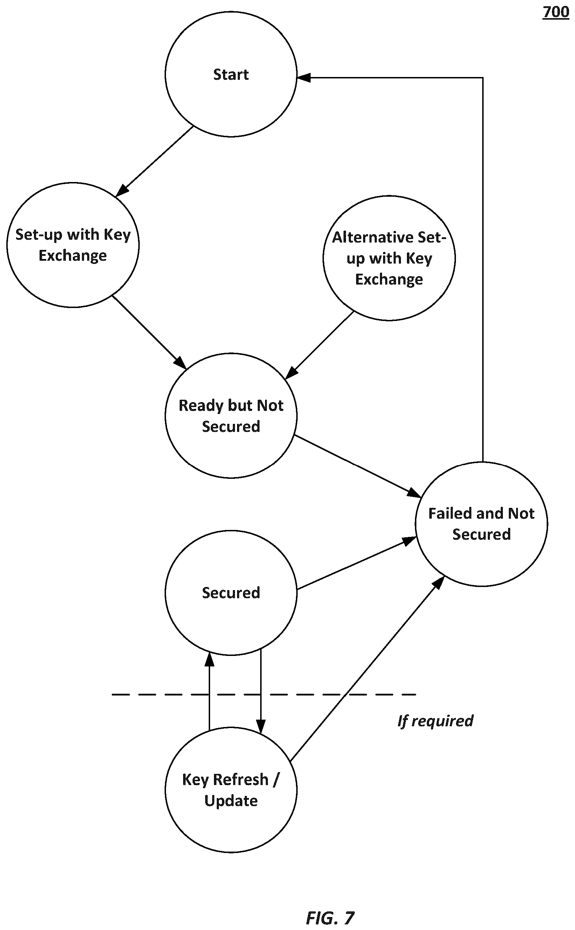

FIG. 7 illustrates secure stream state machine, in accordance with various embodiments. Before using a Secure Stream, operational parameters may be configured if non-default values are to be used, and Key Exchange may complete, at which point the Port is in the Ready_Insecure state. Some or all of this configuration is permitted to be done internally to a Component.

A Port may transition from Ready_Insecure to Secure when a Secure TLP is Transmitted or Received using the newly established Secure Stream. While in Ready_Insecure, Secure, or (if supported) Key_Refresh, if any integrity (MAC) check fails, transition to Fail_Insecure. Detailed requirements for error handling are in a later part of this section.

Secure Stream Association Registers associated with the Stream may be programmed. It is permitted to modify the Secure Stream Association Registers while Secure Streams are in use. Modification of Secure Stream Association Register values may not affect TLP transmission/receptions in progress using unrelated Streams. Hardware behavior is undefined if TLP transmission/reception is in progress using a Stream for which the Secure Stream Association Registers are being modified - It is strongly recommended that software ensure such modifications are not made.

Set, if not already Set, the IDE On bit in the IDE Control Register. Subsequent TLP traffic selected according to the Secure Stream Association Registers may be processed securely. Key refresh, if required, may be managed by system firmware/software, and the specifics of this are outside the scope of this specification.

For a given TLP, if a Secure Link (Secure Stream with ID of 0) is established and one or more Selective Secure Streams are also established, then the association of the TLP to a Selective Secure Stream takes precedence and all TLPs not associated with any Secure Stream may be associated with the Secure Link. For an established Secure Stream, Table 1 defines which TLP types are permitted and how they are associated with the Secure Stream.

In embodiments, a Selective Secure Stream can include secure streams that permit the transmitter to selectively apply IDE onto data blocks. An example of a Selective Secure Stream can include a stream that traverses a switch complex. An example of a Link Stream can include a link that does not need to traverse a switch complex. The determination of whether TLP is to traverse a Selective Secure Stream or Link Stream can be based on destination information, such as address information for memory writes or destination ID for completions.

**Table 1 -TLP Types for Secure Streams**

| **TLP Type** | **Description** | **Secure Link** | **Selective Secure Stream** |
|---|---|---|---|
| MRd | Memory Read Request | Y | Y- Associated by Address |
| MRdLk | Memory Read Request-Locked | Y | Y- Associated by Address |
| MWr | Memory Write Request | Y | Y- Associated by Address |
| IORd | I/O Read Request | Y | N |
| IOWr | I/O Write Request | Y | N |
| CfgRd0 | Configuration Read Type 0 | Y | N |
| CfgWr0 | Configuration Write Type 0 | Y | N |
| CfgRd1 | Configuration Read Type 1 | Y | N |
| CfgWr1 | Configuration Write Type 1 | Y | N |
| TCfgRd | Deprecated TLP Type4 // placeholder | Y | Y- Associated by Address |
| TCfgWr | Deprecated TLP Type4 // placeholder | Y | Y- Associated by Address |
| Msg | Message Request | Y | Y if Route by ID and Source ID and Destination ID are associated with Secure Stream |
| MsgD | Message Request with data | Y | Y if Route by ID and Source ID and Destination ID are associated with Secure Stream |
| Cpl | Completion without Data | Y | Y -Associated by Routing ID |
| CpID | Completion with Data. | Y | Y - Associated by Routing ID |
| CplLk | Completion for Locked Memory Read without Data | Y | Y- Associated by Routing ID |
| CplDLk | Completion for Locked Memory Read - otherwise like CpID. | Y | Y- Associated by Routing ID |
| FetchAdd | Fetch and Add AtomicOp Request | Y | Y- Associated by Address |
| Swap | Unconditional Swap AtomicOp Request | Y | Y- Associated by Address |
| CAS | Compare and Swap AtomicOp Request | Y | Y- Associated by Address |
| LPrfx | Local TLP Prefix | Y | N |
| EPrfx | End-End TLP Prefix | Y | Y - Associated by Address or ID according to the TLP Header |

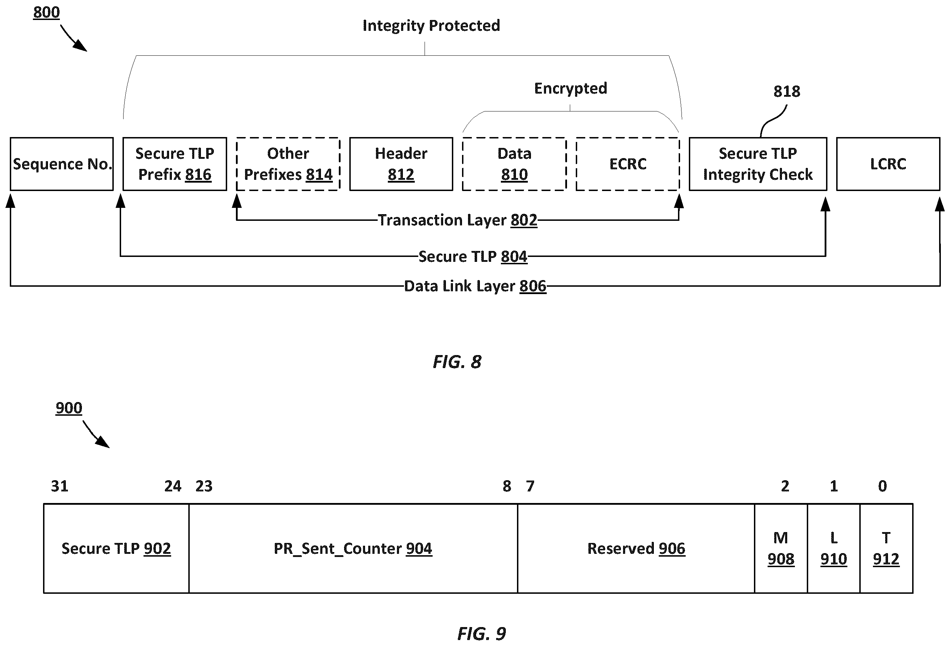

FIG. 8 illustrates Secure TLP Diagram 800, in accordance with various embodiments. Integrity and Data Encryption are enabled and configured per-Stream, and apply to TLPs associated with the Stream. Such TLPs are called Secure TLPs. Encryption, when enabled, applies only to the data payload 810 (if present) and ECRC (if present). TLP integrity, when enabled, covers all TLP content associated with the Stream, and the Message Authentication Code (a.k.a. MAC or Integrity Check) 818, depending on the operational mode selected, is applied per-TLP to all TLPs, or such that select TLPs include a cumulative MAC that covers all TLP content transferred since the preceding TLP to include a MAC. All Secure TLPs must use the Secure TLP prefix 816. As shown, the secure TLP prefix 816 is appended by the transaction layer logic in front of any other prefixes 814 or the packet header 812.

The present disclosure defines a new TLP secure stream prefix for TLPs to indicate whether the TLP is part of a trusted IO session and to convey other secure stream information. FIG. 9 illustrates a Secure TLP Prefix 900, in accordance with various embodiments. The TLP may be part of a trusted IO session if the request is originated by a trusted entity and is to be consumed by another trusted entity. Generally, a trusted entity is part of a trust domain. An initiating device and a target device can each be provisioned with trusted entities as well as non-trusted entities. The presence of secure stream information (e.g. in a prefix of the TLP or otherwise stored in the TLP) indicates that the TLP is secured in a secure stream that provides confidentiality (e.g., encrypted data), integrity protection (e.g., integrity code value for encrypted data, secure stream information, and TLP header), and replay protection (e.g., encryption/decryption counters). It should be noted that the use of the TLP secure stream prefix is for convenience in adding this capability to existing implementations, and in other variations the TLP headers could be modified, or an additional "security layer" could potentially be added to carry secure stream information in a transaction. In one alternative embodiment, some or all of the secure stream information carried in the secure stream prefix could be embedded in the payload of the packet. While the prefix approach is described in detail below, it should be understood that any manner of conveying the needed secure stream information can provide an equivalent result, although possibly with different implementation and/or bandwidth overhead tradeoffs. Thus, the encrypted payload is transparent to intermediate switches. Intermediate switches can use metadata for buffer management and routing, but any tampering or replay can be detected. Table 2 provides an example embodiment of a Secure TLP prefix.

**Table 2. TLP Prefix.**

| End-End TLP Prefix Type | E[3:0] | Description |
|---|---|---|
| ... | | |
| Secure TLP | 0010 | Identifies a TLP associated with a Secure Stream as defined for Integrity and Data Encryption (IDE) |
| ... | | |

In some embodiments, the contents above described as being added to a Secure TLP prefix can also be added to a TLP header of the packet, in which case the Secure TLP prefix can be omitted.

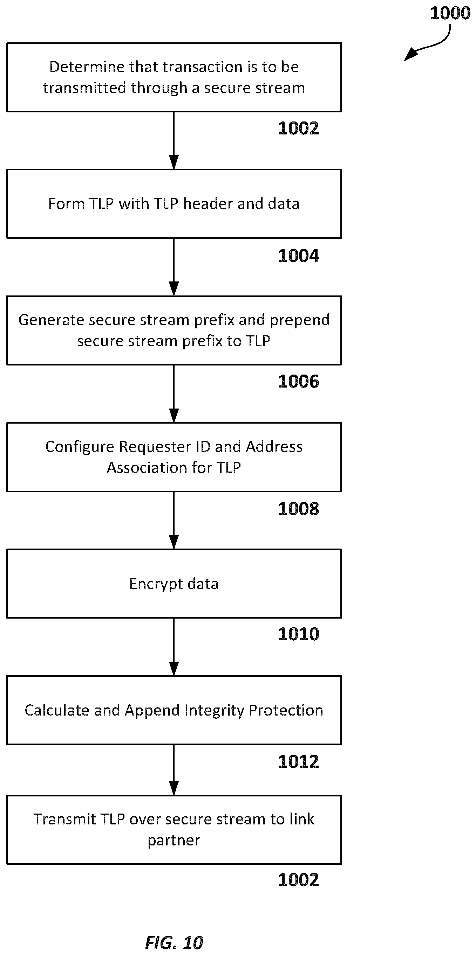

FIG. 10 is a process flow diagram for forming a secure transaction layer packet for transmission across a secure stream in accordance with embodiments of the present disclosure. The initialization of a Secure Stream involves multiple steps, although some of these steps can be merged or performed in a different order as that described herein. An example first step is to establish the authenticity and identity of the components containing the two Ports which are to be the terminals of the Secure Stream. A second step is to "provision" the keys - this may done as part of the same exchange used to establish the authenticity and identity of the components, or by any other mechanism. Third, the Secure Connection must be configured. Finally the establishment of the Secure Connection is triggered.

At the outset, the transmitting device can determine that packets are to be transmitted to a receiving device using a Secure Stream (1002). This determination can be made by first observing capabilities of the two devices for supporting IDE in packet transmissions. User settings, priority settings, type of data, type of connected device, or other reasons can shape the determination for transmitting data across a Secure Stream.

For implementations using CMA and DOE techniques for key-based authentication:
The association between the Ports to be connected via the Secure Stream to be established is precisely defined. For a Secure Link (as opposed to a Selective Secure Stream), the two Ports must have no Switches between them, and for the Upstream Port, Function 0 must be used for the purposes of establishing the authenticity and identify of the associated Component, key exchange, and the configuration and management of the Secure Link.

For a Selective Secure Streams the means of establishing the authenticity and identify of the associated Component, key exchange, and the configuration and management of the Secure Stream, are not defined here. Keys are exchanged via defined CMA/DOE mechanisms in a cryptographically secure manner, for CMA/DOE implementations. For other implementations, key exchanges are also performed in a secure manner according to the authentication mechanisms selected.

The TLP can be formed using the payload data (if any) and any headers needed for transmitting and routing the TLP across a link (1004). The TLP prefix can be generated and prepended to the TLP, as described herein (1006).

To form a Secure TLP, the TLP is associated with a Secure Stream (either a Selective Secure Stream or a Secure Link) (1008). This association can be done by selecting a Requester ID and/or configuring Address Association for the TLP with the Secure Stream. Other associative techniques are described in more detail below.

The data payload can be encrypted (1010). If data encryption is to be performed, said data can be encrypted using, e.g., AES-CTR encryption. Integrity protection can also be applied to the TLP (1012). For example, GMAC can be used for integrity protection. More details are described herein. Once the Secured TLP is formed and the Secure Stream is established, the Secured TLP can be transmitted.

Secure TLPs are protected by Data Link Layer mechanisms, such that physical Link errors are detected and corrected before received TLPs are presented to the receiver's cryptographic processing mechanisms. All Transaction Layer content is integrity protected when integrity is enabled, and all TLP Data Payloads (and ECRC, if present) are encrypted when encryption is enabled.

IDE can use AES-CTR encryption as defined in, for example, NIST Special Publication 800-38A, and GMAC integrity protection as defined in, for example, NIST Special Publication 800-38D, with these additional rules:
a) Key size can be 256 bits.
b) The generation and provisioning of keys is done outside of IDE and the resulting keys can be provided to the IDE hardware via implementation-specific techniques.
b.1) Following this process, one Port is identified as PortX and the other as PortY - For non-peer-to-peer traffic the Downstream Port must be PortX and the Upstream Port must be PortY; For peer-to-peer traffic the selection must be made by means not defined here.
c) Keys can be associated with a Key ID.
c.1) Each Key ID can be provisioned with a unique Key.
c.2) The number of Key IDs supported is implementation-specific.
c.3) Between two Ports communicating using a Secure Stream, each Port must associate the same key with that Secure Stream, but it is not required that the same Key ID be used in both Ports for that key.
c.4) Following key exchange, implementation-specific means must be used to provide the keys to the data path in a secure manner
c.5) The specific requirements for maintaining key security are platform and use case specific, and are not defined here.
d) Different keys are used for AES-CTR encryption and GMAC integrity.
d.1) Separate Key ID association mechanisms are provided for this purpose.
e) GMAC must be operated independently of AES-CTR, using the post-encryption TLP, and must treat all input as Additional Authenticated Data

The following provides a set of Secure Stream guidelines that provide additional details for forming a Secure TLP:
a) All Secure TLPs must be associated with a Secure Stream, identified via a Secure Stream Number.
a.1) A Secure Link must use a Secure Stream Number of zero, and no other Secure Stream is permitted to use this Secure Stream Number.
b) When only a Secure Link is enabled, all TLPs associated with that secure stream must be secured using a Secure Link, and must use the key and counter set established for the Secure Link.
c) When only a Selective Stream Stream is enabled, selected TLPs must be secured using Secure Streams based on the RID and Address Association register settings, and must use the corresponding key and counter set based on the Key ID.
d) When both Secure Link and one or more Selective Stream Stream(s) are enabled, selected TLPs must be associated with the Secure Stream(s) based on the RID and Address association register settings and using the corresponding key and counter set based on the Key ID, and all other TLPs must be using a Secure Link, and must use the key and counter set established for the Secure Link. In some embodiments, the Stream Number can be placed in the prefix.
e) All Secure TLPs not associated with a Secure Link must be associated with a Secure Stream based on information included in the TLP Header.
e.1) For Requests, the association of a TLP with a specific Secure Stream is permitted to be made using the Address and/or the Requester ID.
e.2) For Completions, the association of a TLP with a specific Secure Stream is permitted to be made using the Completer ID and/or the Requester ID.
e.3) A Port supporting Secure Streams must provide a mechanism for distinguishing TLPs associated with Secure Stream(s).
f) Each Port associated with a specific Secure Stream must have a mechanism by which it knows the RID of the other Port associated with that Secure Stream.
g) Separate VCs must use separate Secure Streams.
h) Each Secure Stream includes Sub-Streams:
   h.1) 0000b - Posted Requests Transmitted by PortX and (ultimately) Received by PortY;
   h.2) 0001b - Non-Posted Requests Transmitted by PortX and (ultimately) Received by PortY;
   h.3) 0010b - Completions Transmitted by PortX and (ultimately) Received by PortY;
   h.4) 0011b - Posted Requests Transmitted by PortY and (ultimately) Received by PortX;
   h.5) 0100b - Non-Posted Requests Transmitted by PortY and (ultimately) Received by PortX;
   h.6) 0101b - Completions Transmitted by PortY and (ultimately) Received by PortX;
   h.7) Values 0110b-0111b are Reserved;
   h.8) Values 1000b-11111 are permitted to be used for other uses not defined by this specification.
   i) For each Sub-Stream, there must be two counter blocks, one for AES-CTR and one for GMAC, that must each consist of these fields:
      i.1) bits 127:124 contain a fixed value indicating the Sub-Stream (encoded as defined above);
      i.2) bits 123:96 are Reserved;
      i.3) bits 95:32 contain the value of an LFSR with taps at positions 64, 63, 61 and 60 set and advanced every time a counter block is consumed;
      i.4) bits 31:0 must be 0000_0001h.

In some embodiments, a single counter block can be used. For each Sub-Stream, per [AES-GCM], there must be a 96b initialization vector IV of deterministic construction, consisting of:
a fixed field in bits 95:64 of the IV, where bits 95:92 contain a fixed value indicating the Sub-Stream (encoded as defined above), and bits 91:64 are all 0's;
an invocation field in bits 63:0 of the IV, containing the value of an LFSR with taps at positions 64, 63, 61 and 60, initially set to the value 0000_0001h, and advanced every time an IV is consumed.
j) A Secure TLP must have a Secure TLP Prefix that must be prepended ahead of all other Prefixes on the TLP.
j.1) On a Secure Link, Local TLP Prefixes must be included in the TLP's integrity check
j.2) Local TLP Prefixes are not permitted for Selective Secure Stream TLPs
k) The Secure TLP Prefix includes:
k.1) L bit - When Set, indicates this is the last TLP in this Sub-Stream using the current key set;
k.1.1) The mechanisms for establishing a new key set and managing key set transitions are not defined in this document;
k.1.2) After Transmitting a TLP with the L bit Set, the Transmitter must wait for at least [500ns?] before transmitting another TLP associated with this Sub-Stream; all subsequent TLPs must use the new key set;
k.1.3) After Receiving a TLP with the L bit Set, the Receiver must transition to the new key set for all subsequent TLPs associated with the Sub-Stream.
k.2) T bit - When Set, indicates the TLP originated from within a trusted execution environment:
   k.2.1) It is permitted for Secure TLPs to originate from both trusted and non-trusted execution environments; the rules for trusted execution environments are [not defined in this document]
   I) M bit - When Set, indicates the TLP includes a MAC.
   m) PR_Sent_Counter - For Non-Posted Requests and Completions the value must be determined according to the following rules. The PR_Sent_Counter is set as Reserved for Posted Requests.

The following rules apply for each Secure Stream:
For the Transmitter, two 16 bit counters are be maintained: PR_Sent_Counter-NPR and PR_Sent_Counter-CPL.

Both counters are be incremented for each Posted Request Secure TLP Transmitted associated with the Secure Stream.

The PR_Sent_Counter-NPR value is included in the PR_Sent_Counter field of the Secure TLP Prefix for each Non-Posted Secure TLP Transmitted associated with the Secure Stream, and then PR_Sent_Counter-NPR must be reset to 0.

When PR_Sent_Counter-NPR exceeds 2^15, an Integrity Sync Message may be transmitted, and then both the PR_Sent_Counter-NPR and PR_Sent_Counter-CPL may be reset to 0. In embodiments, the Integrity Sync Message is permitted to be sent at other times for other reasons.

The PR_Sent_Counter-CPL value must be included in the PR_Sent_Counter field of the Secure TLP Prefix for each Completion Secure TLP Transmitted associated with the Secure Stream, and then PR_Sent_Counter-CPL must be reset to 0.

When PR_Received_Counter-CPL exceeds 2^15, an Integrity Sync Message may be transmitted, and then both the PR_Sent_Counter-NPR and PR_Sent_Counter-CPL must be reset to 0.

For the Receiver, two 16 bit counters must be maintained: PR_Received_Counter-NPR and PR_Received_Counter-CPL -

Both counters are incremented for each Posted Request Secure TLP Received associated with the Secure Stream.

When a Non-Posted Request is received then the PR_Sent_Counter value carried in the Secure TLP prefix may be subtracted from the PR_Received_Counter-NPR, and the PR_Received_Counter-NPR updated with the result.

When a Completion is received then the PR_Sent_Counter value carried in the Secure TLP prefix may be subtracted from the PR_Received_Counter-CPL, and the PR_Received_Counter-CPL updated with the result.

When an Integrity Sync Message is received then:
The PR_Sent_Counter-NPR value carried in the Secure Stream Sync Message must be subtracted from the PR_Received_Counter-NPR, and the PR_Received_Counter-NPR updated with the result.

The PR_Sent_Counter-CPL value carried in the Secure Stream Sync Message must be subtracted from the PR_Received_Counter-CPL, and the PR_Received_Counter-CPL updated with the result.

If either/both the PR_Received_Counter-NPR or PR_Received_Counter-CPL underflows when subtracting the PR_Sent_Counter from a Received TLP, or from an Integrity Sync Message, this indicates an illegal TLP reordering has occurred. This is a reported error associated with the Receiving Port.
When Per-TLP GMAC is enabled, Integrity must be applied to every TLP associated with the Secure Stream
The GMAC must be calculated including all content of the TLP, following Data Encryption if that is enabled, excluding the MAC value itself

When Aggregated GMAC is enabled, Integrity must be applied to TLPs associated with the Secure Stream whenever triggered by a write to the Trigger Integrity Check bit associated with the Secure Stream, and whenever selected by the Transmitter via implementation-specific mechanisms.
For the first TLP to include a MAC, the GMAC value must be calculated including all TLP content, following Data Encryption if that is enabled, for all TLPs associated with the secure stream transmitted since the secure stream was established, excluding the MAC value itself
For subsequent TLPs to include a MAC, the GMAC must be calculated including all TLP content, following Data Encryption if that is enabled, for all TLPs associated with the secure stream transmitted since the last TLP including a MAC was transmitted, including the TLP currently being transmitted with a MAC, but excluding the MAC value itself

When the Integrity Mode field is programmed to a supported value, Integrity checking must be performed at the Receiver for all TLPs that include a MAC. Notably, the integrity check can come after the LCRC is configured and confirmed.

The following are defined errors associated with a Secure Stream:
MAC check failure - Receiver's check of the MAC of a received TLP fails
PR-Received-Counter-NPR/PR_Received_Counter-CPL underflow - Indicates an improper reordering has been detected
PR-Received-Counter-NPR/PR_Received_Counter-CPL overflow - Indicates a failure to receive the required NPR
If one or both of these conditions are detected, the Secure Stream State Machine for this Secure Stream must enter Fail_Insecure.

Receiving a Completion with UR or UC status is not a security error and must not by itself trigger a transition to Fail_Insecure.

In Fail_Insecure the key set for the associated Secure Stream must be marked as invalid.

Receiver handling of TLPs that fail the integrity check is implementation-specific; it is strongly recommended that such TLPs be prevented from causing irrecoverable data corruption.
To exit Fail_Insecure, the associated Secure Stream must be re-established using a new key set
In the Fail_Insecure state, private data associated with the affected Secure Stream must, in implementation-specific ways, be protected
At an Upstream Port, upon entry to Fail_Insecure, an Integrity Check Fail Msg indicating the Key ID of the associated Link/Stream (that in turn identifies the associated Secure Stream) must be Transmitted
A Downstream Port upon receiving an Integrity Check Fail Msg must immediately enter Fail_Insecure for the associated Secure Stream
On any Link Down, all Secure Streams must transition to Fail_Inscure

### Additional rules specific to a Secure Link:

On entry into Fail_Insecure handling determined per Port by the configured Containment Behavior in the IDE Control Register:
000b - Force Link to Down.
001b - Memory and IO Requests in both directions terminated as UR; Received Completions for Mem/IO must be dropped; Cfg and Msg Requests/Completions continue to operate in both directions.
010b - For Upstream Ports, same as 000b; For Downstream Ports, as with 000b but in addition Cfg Requests through normal path terminated as UR and received Completions dropped; but Configuration traffic continues to operate through the System Firmware Intermediary (SFI) mechanism, if available.
011b - All requests in both directions are terminated as UR and all Received Completions are dropped.

In Fail_Insecure, for a Downstream Port, Configuration Traffic targeting structures in the Port's Config space defined in this specification must continue to be accepted and completed as they would otherwise have been; Configuration traffic targeting structures not defined in this specification (e.g. VSECs) are permitted to be completed as UR.
To exit Fail_Insecure, either a Fundamental Reset must be used (triggered by platform-specific means), or system firmware/software must Clear Secure Link On at the Downstream Port, wait for 100us, then-
Optionally, access the Upstream Port Configuration Registers to perform error logging, then-
Use Secondary Bus Reset to issue a Hot Reset to the Downstream Component, then-
Re-enumerate/configure the Link and Component.

Security and Power Management must be coordinated to maintain secure environment. Referring to Table 3, Ports maintain secure state while in non-underlined states, and Ports purge secure state while in (underlined) states.

**Table 3. Secure Connection State in Relation to D and L State**

| Downstream Component D-State | Permissible Upstream Component D-State | Permissible Interconnect State |
|---|---|---|
| D0 | D0 | L0, L0s, L1, L2/L3 Ready |
| D1 | D0-D1 | L1, L2/L3 Ready |
| D2 | D0-D2 | L1, L2/L3 Ready |
| D3(hot) | D0-D3(hot) | L1, L2/L3 Ready |
| D3(cold) | D0-D3(cold) | L2, L3 |

System firmware/software, must be aware of PM transitions that will lose security state and take appropriate actions as required to maintain Secure operations - how this is done is outside the scope of this document.

In all cases, hardware must protect against leakage of private data and integrity violations - how this is done is implementation-specific.

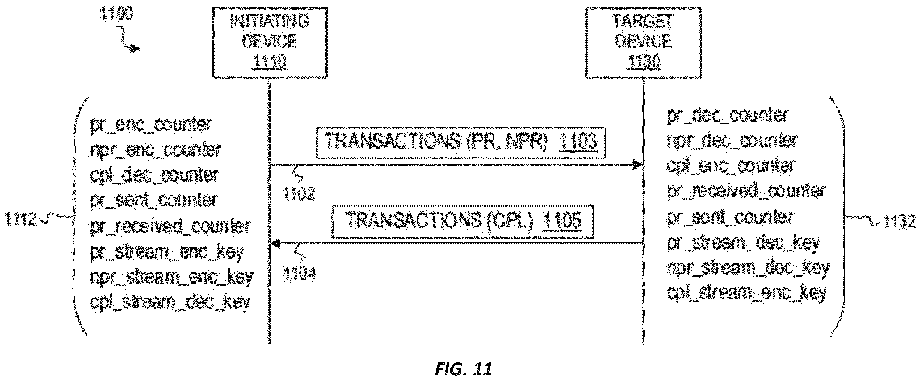

FIG. 11 is an interaction diagram 1100 that illustrates the various possible counters and keys that can be used a secure stream protocol operating in a restricted ordering mode (ROM) using three secure streams according to at least one embodiment. Interaction diagram 1100 shows an initiating device 1110 and a target device 1130. Two connections 1102 and 1104 are established between initiating device 1110 and target device 1130. Connections 1102 and 1104 can include one or more intermediate devices (e.g., switches, bridges), which are not shown for ease of illustration. Initiating device 1110 can send a transaction 1103 (e.g., posted or non-posted) to target device 1130 via connection 1102. In some scenarios, a transaction 1105 may be sent to initiating device 1110 from target device (e.g., completions) via connection 1104. Completion requests are sent in response to transactions that require a response, such as non-posted (NPR) transactions. For example, NPR transactions can include read requests or write requests that require a response.

The counters and keys shown in FIG. 11 may be used in an implementation of a secure stream protocol where each transaction type is treated as a separate protected stream with separate counters and keys. Three streams correspond respectively to posted transactions, non-posted transactions, and completion transactions. One or more embodiments may implement a counter-based scheme for encryption. Example counters and keys that may be used by initiating device 1110 are shown at 1112. Example counters and keys that may be used by target device 1130 are shown at 1132. For each direction of transaction flows, the initiating device and the target device of that direction maintain the following counters, which may be initialized during setup of the secure stream protocol:

COUNTERS FOR POSTED REQUESTS (pr_enc_counter, pr_dec_counter) - These counters can be 64 bit counters with a 32 bit random prefix. This counter pair can be used for authenticated encryption and decryption of posted requests.

COUNTERS FOR NON-POSTED REQUESTS (npr_enc_counter, npr_dec_counter) - These counters can be 64 bit counters with a 32 bit random prefix. This counter pair can be used for authenticated encryption and decryption of non-posted requests.

COUNTERS FOR COMPLETION REQUESTS (cpl_enc_counter, cpl_dec_counter)-These counters can be 64 bit counters with a 32 bit random prefix. This counter pair can be used for authenticated encryption and decryption of completion requests.

COUNTER FOR POSTED REQUESTS SENT (pr_sent_counter) -This counter can be a 16 bit counter. This counter can be used to detect dropped/delayed posted requests. This counter contains a value representing the number of posted requests sent since the last non-posted or completion request was sent. This counter also acts as a check to enforce producer-consumer ordering such that non-posted requests and completion requests are not reordered ahead of posted requests.

COUNTER FOR POSTED REQUESTS RECEIVED (pr_received_counter) - This counter can be a 32 bit counter. This counter can be used to detect dropped/delayed posted requests. This counter contains a value representing the number of posted requests received since the last non-posted or completion request was received. This counter also acts as a check to enforce producer-consumer ordering such that non-posted requests and completion requests are not reordered ahead of posted requests.

In addition to encryption and decryption counters, encryption and decryption keys for the secure stream protocol may be maintained at both the initiating device and the target device. The encryption and decryption keys may be initialized per session and a different pair of encryption keys may be initialized per transaction type. For example, for posted transactions (e.g., 1103) sent from initiating device 1110 to target device 1130, initiating device 1110 can maintain PR encryption key identified as pr_stream_enc_key for encrypting PR data to be sent to target device 1130, and target device 1130 can maintain a corresponding PR decryption key identified as pr_stream_dec_key for decrypting PR data received by initiating device 1110. The encryption and decryption can be performed in conjunction with the PR encryption and decryption counters, respectively. In addition, the PR encryption key and PR encryption counter can also be used by the initiating device to generate an integrity code value (ICV) over the TLP (e.g., TLP secure stream prefix, TLP header(s), encrypted data). The target device that receives the posted transaction can use the corresponding PR decryption key and PR decryption counter to verify the ICV of the received posted transaction.

For non-posted transactions (e.g., 1103) sent from initiating device 1110 to target device 1130, initiating device 1110 can maintain NPR encryption key identified as npr_stream_enc_key for encrypting NPR data to be sent, and target device 1130 can maintain a corresponding NPR decryption key identified as npr_stream_dec_key for decrypting received NPR data. The encryption and decryption can be performed in conjunction with the NPR encryption and decryption counters, respectively. In addition, the NPR encryption key and NPR encryption counter can also be used by the initiating device to generate an integrity code value (ICV) over the TLP (e.g., TLP secure stream prefix, TLP header(s), encrypted data). The target device that receives the non-posted transaction can use the corresponding NPR decryption key and NPR decryption counter to verify the ICV of the received non-posted transaction.

For completion transactions sent from target device 1130 to initiating device 1110, target device 1130 can maintain a CPL encryption key identified as cpl_stream_enc_key for encrypting CPL data to be sent, and initiating device 1110 can maintain a corresponding CPL decryption key identified as cpl_stream_dec_key for decrypting received CPL data. The encryption and decryption can be performed in conjunction with the CPL encryption and decryption counters, respectively. In addition, the CPL encryption key and CPL encryption counter can also be used by the target device to generate an integrity code value (ICV) over the TLP (e.g., TLP secure stream prefix, TLP header(s), encrypted data). The initiating device that receives the completion transaction can use the corresponding CPL decryption key and CPL decryption counter to verify the ICV of the received completion transaction.

In at least one embodiment, symmetric encryption can be used. In this embodiment, for each pair of keys used for a type of transaction, the same key is used for both encryption and decryption. For example, pr_stream_enc_key is equivalent to pr_stream_dec_key, npr_stream_enc_key is equivalent to npr_stream_dec_key, and cpl_stream_enc_key is equivalent to cpl_stream_dec_key.

In one example, Advanced Encryption Standard-Galois Counter Mode (AES-GCM) of operation may be used to provide counter mode encryption of data and a message authentication code for the data. Counter mode encryption uses symmetric key cryptographic block ciphers. Generally, a block cipher is an encryption algorithm that uses a symmetric key to encrypt a block of data in a way that provides confidentiality or authenticity. A counter mode of operation turns a block cipher into a stream cipher. An input block, which is an initialization vector (IV) concatenated with a counter value, is encrypted with a key by a block cipher. The output of the block cipher is used to encrypt (e.g., by an XOR function) a block of plaintext to produce a ciphertext. Successive values of the IV and counter value are used to encrypt successive blocks of plaintext to produce additional blocks of ciphertext.

In addition to producing ciphertext from input data, the GCM operation also calculates a Galois message authentication code (GMAC). A GMAC, which is more generally referred to as a 'tag' or 'authentication tag', is a few bytes of information used to authenticate a message (or transaction). A GMAC is one example of an ICV that can be generated over the TLP packet (e.g., TLP secure stream prefix, TLP header(s), encrypted data). In at least one embodiment, a multiplier function is used to calculate a GMAC based on the ciphertext blocks produced from the encryption of the plaintext blocks. The GMAC can be appended to the ciphertext. While AES-GCM is one possible type of encryption and authentication technique that may be used in one or more embodiments, it should be apparent to those in the art that any other suitable type of encryption and authentication may also be used (e.g., SHA-3, Hash message authentication code (HMAC), AES-CTR, etc.).

One example algorithm for performing encryption can include an encryption algorithm that relies on an initialization vector (IV) that is deterministically constructed. An IV can be considered as a concatenation of a fixed field and an invocation field. The fixed field can include a single field or multiple fields, and can identify the device or context for the instance of the authenticated encryption function. The invocation field can identify sets of inputs to the authenticated encryption function in that device or context. No two device would share the same fixed field; nor would two sets of inputs share the same invocation field. An invocation field can include an integer counter or linear feedback shift register that is driven by a polynomial to ensure a maximal cycle length. In either case, the invocation field increments upon each invocation of the authentication encryption function.

The IV can be used for authentication encryption and decryption purposes. For example, for encryption, given text P and additional authentication data A, and an IV, the text P and data A can be encrypted using, in part, the deterministically constructed IV, among other things. In this context, the text P can include the data to be transmitted across the link and the additional authentication data A can include TLP headers and/or prefixes for integrity protection.

The IV can be used to generate a counter block, which can be incremented to establish the Galois counter function for the text P, resulting in a new enhanced plain text C. Along with additional authentication data A, enhanced plain text C can be enhanced by a Galois HASH function to produce a single output block. The output block is then encrypted with the Galois counter function that is also generated by the IV and a counter block.

Implementation details concerning AES-GCM can be found at NIST Special Publication 800-38D for Computer Security, published November 2007, by the United States Department of Commerce.

Although the embodiment described above offers one possible approach in which the same encryption/decryption keys and counters are used to encrypt and decrypt data in a TLP and to verify the integrity of the TLP, it should be noted that any other suitable encryption/decryption and integrity verification schemes may be implemented to secure a transaction in a secure stream. In another embodiment for example, a different key may be used for encryption and ICV generation for each packet type. That is, encryption of a posted request payload may be done with a first posted key, and ICV generation over the posted request payload, header, and prefix may be done using a second posted key, which is different than the first posted key. Encryption of a non-posted request payload may be done with a first non-posted key, and ICV generation over the non-posted request payload, header, and prefix may be done using a second non-posted key, which is different than the first non-posted key. Encryption of a completion request payload may be done with a first completion key, and ICV generation over the completion request payload, header, and prefix may be done using a second completion key, which is different than the first completion key. It should be noted that an ICV can be generated over a TLP secure stream prefix, a TLP header (or headers if more than one is used), and encrypted payload data. However, in some embodiments, other fields of the TLP may also be included in the ICV (e.g., ECRC).

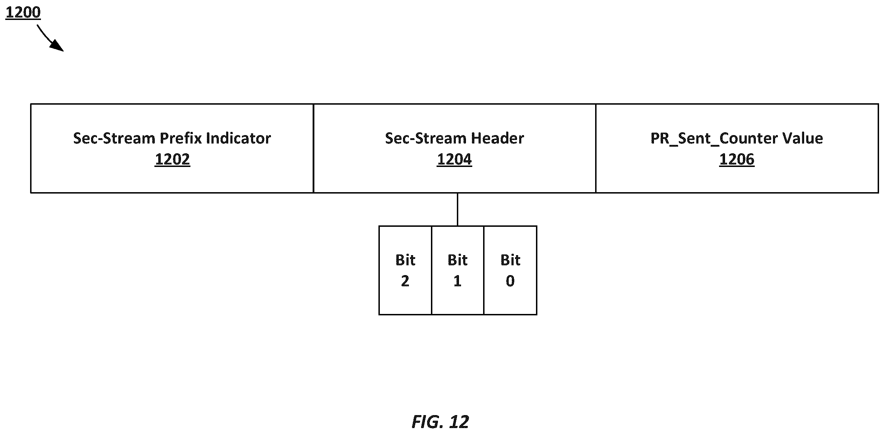

FIG. 12 illustrates a possible format of a TLP secure stream prefix 1200 that may be carried by each transaction in a system implementing a secure stream protocol operating in restricted ordering mode using either two secured streams or three secured streams according to at least one embodiment. The format includes a sec-stream prefix indicator 1202, a sec-stream prefix header 1204, and a pr_sent_counter value 1206. The pr_sent_counter value 1206 represents the number of posted transactions that have been sent from an initiating device to the target device since the last non-posted or completion transaction was sent from an initiating device to a target device. The sec-stream prefix indicator 1202 indicates a type of the TLP secure stream prefix 1200. For example, prefix indicator 1202 can indicate that TLP secure stream prefix 1200 contains information related to the secure stream protocol.

In at least one embodiment, three bits are defined in sec-stream header 1204. A first bit (e.g., BIT 0) may be a trusted bit that is an indication of whether the transaction is part of a trusted IO session. A trusted bit is used to differentiate software entities or functions at the two ends of a secure stream. The secure stream may be shared by trusted and non-trusted functions/software. Accordingly, the trusted bit indicates whether the transaction was originated by a trusted entity at one end (e.g., initiating device) and is to be consumed by a trusted entity on the other end (e.g., target device). For example, a device connected to a server platform and needing direct access to memory in a trust domain of the server platform may be a trusted entity. A memory storage controller is one possible example of a trusted entity.

A second bit (e.g., BIT 1) is an indication of whether pr_sent_counter value 1206 is included in TLP secure stream prefix 1200. In at least one embodiment, pr_sent_counter value 1206 is included in the TLP secure stream prefix for non-posted transactions and completion transactions and the second bit can be set to 1 to indicate the presence of the counter in the TLP secure stream prefix.

A third bit (e.g., BIT 2) may be used as an indication of whether the secure stream protocol is in a restricted ordering mode (ROM) or an explicit counter mode (ECM). In one example, if the third bit is set to 0, then the secure stream protocol is operating in the restricted ordering mode, and if the third bit is set to 1, then the secure stream protocol is operating in the explicit counter mode. When the mode is ECM, the counter used for encryption of data in a TLP and integrity verification of the TLP (e.g., pr_enc_counter, npr_enc_counter, cpl_enc_counter) may be carried as the first N bytes of the payload of the packet according to at least one embodiment.

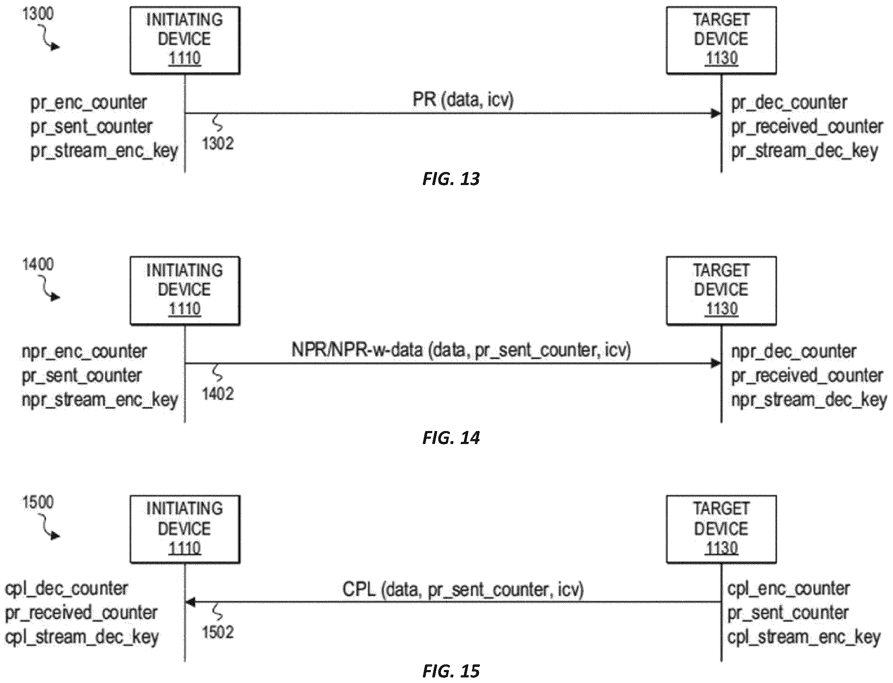

Turning to FIGS. 13-15, interaction diagrams illustrate the possible transactions that may occur in an interconnect architecture implementing a secure stream protocol operating in a restricted ordering mode (ROM) according to one or more embodiments. Transactions, counters, and keys illustrated in FIGS. 13-15 are based on a secure three-stream protocol implementation. The three streams correspond respectively to posted transactions, non-posted transactions, and completion transactions.

FIG. 13 is an interaction diagram 1300 illustrating a secure three-stream protocol for a posted request 1302 sent from initiating device 1110 to target device 1130. Initiating device 1110 samples its PR encryption counter (e.g., pr_enc_counter) and increments the sampled value. Initiating device 1110 also increments the value of its PR sent counter (e.g., pr_sent_counter). Sampling a counter can include obtaining the value of the counter and possibly storing it for quick access. Initiating device 1110 encrypts data of a transaction layer packet (TLP) used to form the posted request 1302. Encryption may be performed using the incremented value of the PR encryption counter and a PR encryption key (e.g., pr_stream_enc_key). An integrity code value (ICV), such as a MAC, is also computed over the TLP including the encrypted data, a TLP header, and a TLP secure stream prefix. Initiating device 1110 sends the posted request secured by the encrypted data and the ICV to target device 1130.

Target device 1130 samples the value of its PR decryption counter (e.g., pr_dec_counter) and increments the sampled value. Target device 1130 also increments the value of its PR received counter (e.g., pr_received_counter). Target device 1130 decrypts the data in the TLP of the received posted request using the incremented value of the PR decryption counter and a PR decryption key (e.g., pr_stream_dec_key). In at least one embodiment, the encryption key and decryption key for posted requests are the same. Target device 1130 verifies the integrity of the TLP by verifying the ICV received for the TLP. In at least one embodiment, the ICV is a MAC, such as a GMAC, which is verified using the PR decryption counter and PR decryption key. In another embodiment, a different key and counter (e.g., pr_mac_key, pr_mac_counter) may be used to generate the ICV. If the ICV verification fails, then an error is raised (e.g., error message is logged, response to send to initiating device is generated, keys are reinitialized, etc.) Otherwise, the target device consumes the packet.

FIG. 14 is an interaction diagram 1400 illustrating a secure stream protocol operation for a non-posted request 1402 (with or without data) sent from initiating device 1110 to target device 1130. Initiating device 1110 samples the value of its NPR encryption counter (e.g., npr_enc_counter) and increments the sampled value. Initiating device 1110 also samples the value of its PR sent counter (e.g., pr_sent_counter) and then zeroes the value in the PR sent counter. Initiating device 1110 encrypts data of a TLP used to form non-posted request 1402. Encryption may be performed using the incremented value of the NPR encryption counter and an NPR encryption key (e.g., npr_stream_enc_key). An integrity code value (ICV), such as a MAC, is also computed over the TLP including the encrypted data, a TLP header, and a TLP secure stream prefix. Initiating device 1110 sends the non-posted request secured by the encrypted data and the ICV to target device 1130. In addition, the TLP also carries the sampled value of the PR sent counter to indicate how many posted requests have been sent by initiating device 1110 since the last non-posted or completion transaction.

Target device 1130 samples the value of its NPR decryption counter (e.g., npr_dec_counter) and increments the sampled value. Target device 1130 decrypts the data in the TLP of the received non-posted request using the incremented value of the NPR decryption counter and an NPR decryption key (e.g., npr_stream_dec_key). In at least one embodiment, the encryption key and decryption key for non-posted requests are the same. Target device 1130 verifies the integrity of the TLP by verifying the ICV received for the TLP. In at least one embodiment, the ICV is a MAC, which is verified using the incremented value of the NPR decryption counter and the NPR decryption key. If the ICV verification fails, then an error is raised (e.g., log an error message, generate a response to send to the target device, reinitialize keys, etc.). Otherwise, the value of a PR received counter (e.g., pr_received_counter) maintained by target device 1130 is decremented by the value of the PR sent counter in the TLP received from initiating device 1110. If the resulting value of the PR received counter is less than zero, this indicates that one or more posted requests have been dropped and/or delayed. Consequently, an error is raised (e.g., error message is logged, response is generated to notify initiating device, session is terminated, etc.). Otherwise the target device consumes the packet. In some embodiments, the PR received counter evaluation may occur before or parallel to the MAC verification.

FIG. 15 is an interaction diagram 1500 illustrating a secure stream protocol operation for a completion request 1502 sent from target device 1130 to initiating device 1110. Target device 1130 samples the value of its CPL encryption counter (e.g., cpl_enc_counter) and increments the sampled value. Target device 1130 also samples the value of its own PR sent counter (e.g., pr_sent_counter at target device 1130) and then zeroes the value in the PR sent counter. Target device 1130 encrypts data of a TLP used to form completion request 1502. Encryption may be performed using the incremented value of the CPL encryption counter and a CPL encryption key (e.g., cpl_stream_enc_key). An integrity code value (ICV), such as a MAC, is also computed over the TLP including the encrypted data, a TLP header, and a TLP secure stream prefix. Target device 1130 sends the completion request secured by the encrypted data and the ICV to target device 1130. In addition, the TLP also carries the sampled value of the PR sent counter to indicate how many posted requests have been sent by target device 1130 since the last non-posted or completion transaction was sent by target device 1130 to initiating device 1110.

Initiating device 1110 samples the value of its CPL decryption counter (e.g., cpl_dec_counter) and increments the sampled value. Initiating device 1110 decrypts the data in the TLP of the received completion request using the incremented value of the CPL decryption counter and a CPL decryption key (e.g., cpl_stream_dec_key). In at least one embodiment, the encryption key and decryption key for completion requests are the same. Initiating device 1110 verifies the integrity of the TLP by verifying the ICV received for the TLP. In at least one embodiment, the ICV is a MAC, which is verified using the incremented value of the CPL decryption counter and the CPL decryption key. If the ICV verification fails, then an error is raised (e.g., error message is logged, response to send to the target device is generated, keys are reinitialized, etc.). Otherwise, the value of a PR received counter (e.g., pr_received_counter) maintained by initiating device 1110 is decremented by the value of the PR sent counter (e.g., pr_sent_counter) received from target device 1130. If the resulting value of the PR received counter is less than zero, this indicates that one or more posted requests have been dropped and/or delayed. Consequently, an error is raised (e.g., error message is logged, response is generated to notify initiating device, session is terminated, etc.). Otherwise the initiating device 1110 consumes the packet. In some embodiments, the PR received counter evaluation may occur before the MAC verification.

It should be noted that operations of initiating device 1110 and target device 1130 were described with reference to sending posted and non-posted requests from initiating device 1110 and sending completion transactions from the target device 1130 in response to the non-posted transactions. It should be apparent, however, that initiating device 1110 can operate as a target device and that target device 1130 can operate as an initiating device.

Secure TLPs can be reordered to satisfy the requirements for deadlock avoidance, but some other forms of reordering are forbidden as Secure TLPs pass over PCle between Ports. The following examples illustrate selected reordering cases. An attack based on TLP reordering (or delay which has the effect of reordering) can be implemented using a variety of mechanisms that all result in the same observed behavior, and will be detected using the mechanisms defined by IDE.

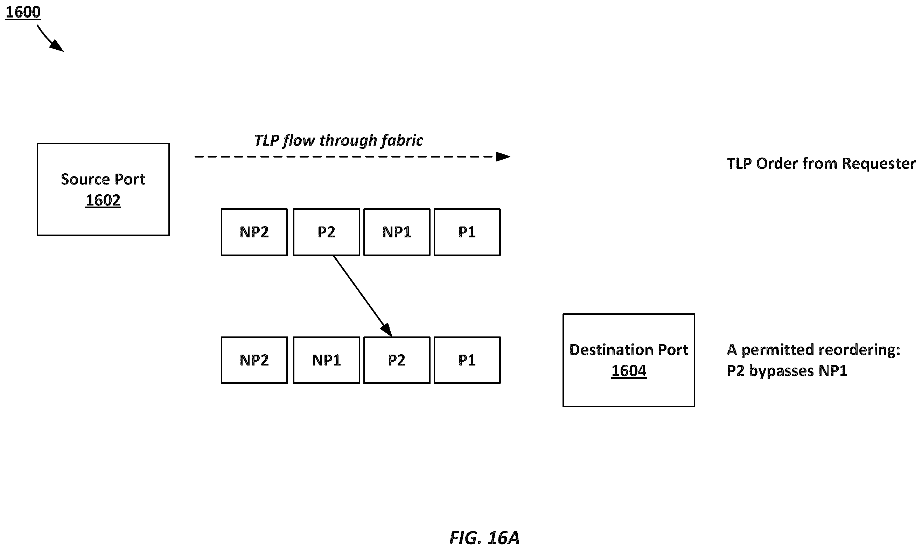

FIGS. 16A-C are schematic diagrams illustrating example reordering for IDE TLPs in accordance with embodiments of the present disclosure. FIG. 16A illustrates a first example TPL flow 1600through a fabric. A source port 1602 can transmit a set of TLPs in a given order, determined by a requester. In this example, the requester has requested a posted P1 request, a nonposted NP1 request, a posted P2 request, and a nonposted NP2 request. A permissible reordering can include a scenario where P2 bypasses NP1 and arrives at the destination port 1604 prior to NP1.

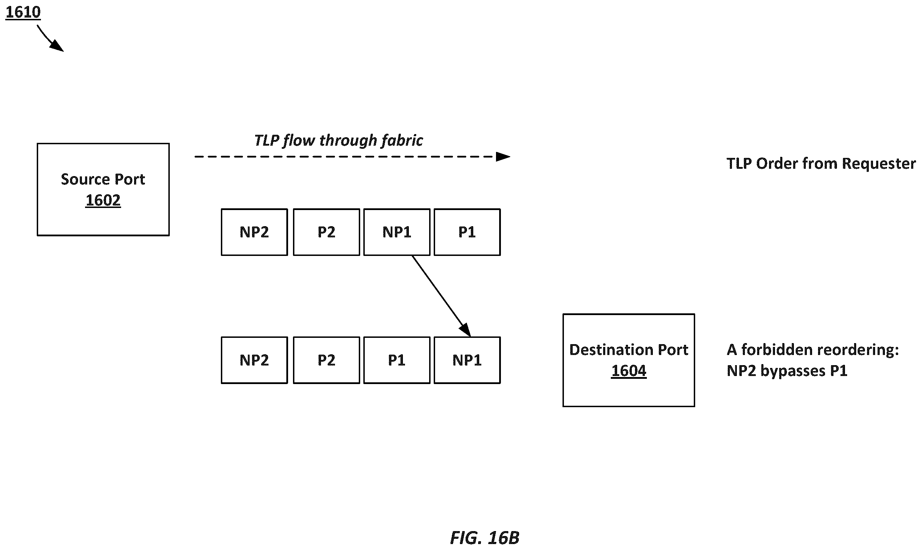

FIG. 16B illustrates a second example TPL flow 1610 through a fabric. FIG. 16B illustrates a forbidden reordering. In this example, NP1 bypasses P1, which is not allowed.

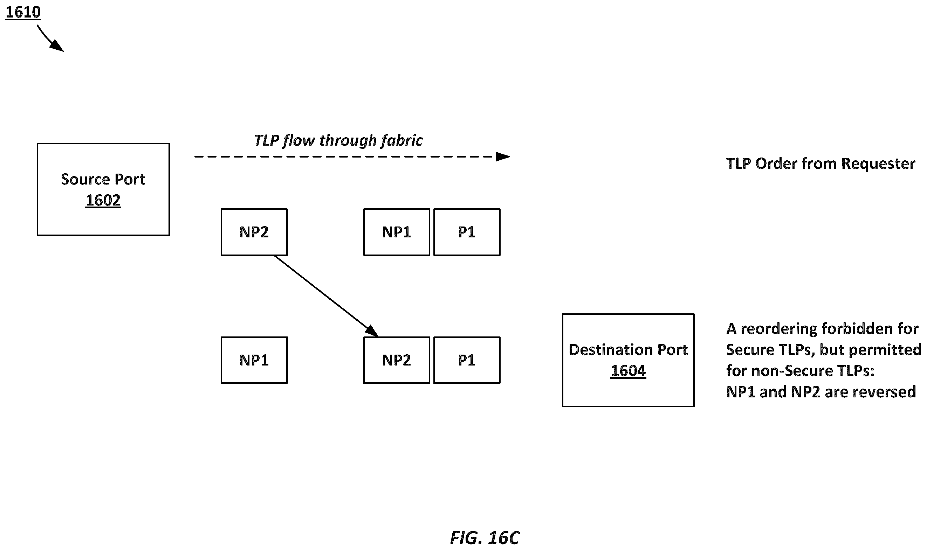

FIG. 16C illustrates a third example TPL flow 1620 through a fabric. In TPL flow 1620, the reordering of NP1 and NP2 is permissible for non-secure TLPs; but reordering of NP1 and NP2 is forbidden for secure TLPs.

Note that it is not required that the PR_Sent_Counter value in the received TLP prefix match the PR_Received_Counter, since posted requests are allowed to pass Non-Posted Requests and Completions. When this (legal) bypassing occurs the PR_Received_Counter may have a value greater than the PR_Sent_Counter in the TLP prefix.

Similar scenarios apply between Posted Requests and Completions.

Note that reordering attacks are possible through Retimers, Switches, and any other device or equipment that can alter the flow of TLPs at any point between the originating Port and the Destination Port. Table 4 provides example additions to a transaction layer error list.

**Table 4. Transaction Layer Error List for Secure TLP**

| Error Name | Error Type | Detecting Agent Action |
|---|---|---|
| ... | | |
| GMAC Check Failure | Uncorrectable (Non-Fatal) | Mark key as being in error - all subsequent |
| PR-Received-Counter-NPR, PR-Received-Counter-CPL underflow | | TLPs over this stream treated as having MAC check failure |
| | | Send ERR_NONFATAL to root complex. |
| PR-Received-Counter-NPR, PR-Received-Counter-CPL overflow | | Log the prefix/header of the TLP that encountered the error |
| | | Signal UR for requests and Unexpected completions for completions |
| Misrouted Secure TLP | Uncorrectable (Non-Fatal) | Send ERR_NONFATAL to root complex. |

### IDE Messages

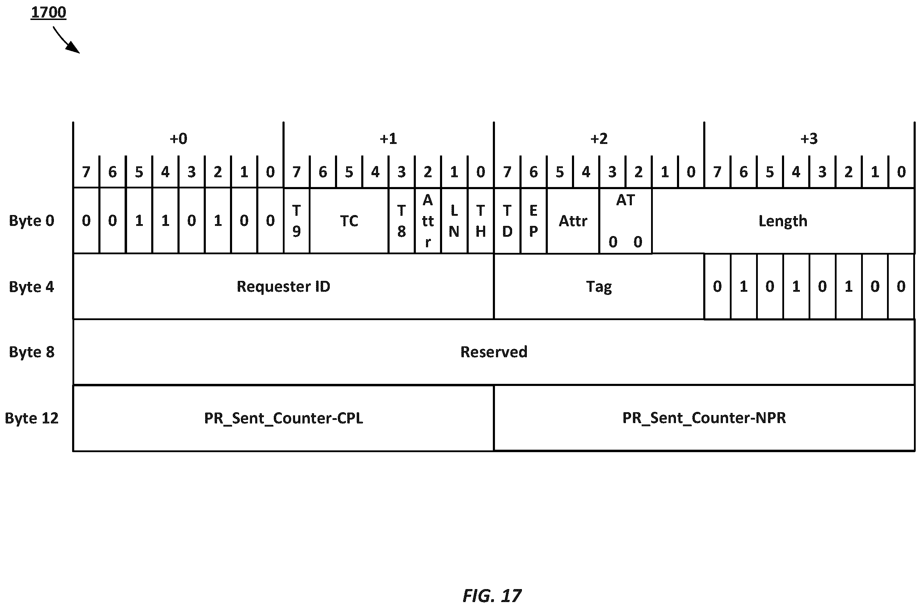

FIGS. 17-20 illustrate various example integrity messages associated with secure link or Selective secure streams, in accordance with various embodiments. The messages may be applicable to the computer bus 105 shown in FIG. 1. IDE Messages are used with the optional Integrity and Data Encryption (IDE) mechanism. The following rules apply to the formation of IDE Messages:
- The IDE Messages do not include a data payload (TLP Type is Msg).
- The Length field is Reserved.
- The Requester ID must be set to the Transmitting Port's ID.
- Integrity Sync Messages associated with a Secure Link must use Local routing (100b); Integrity Sync Messages associated with a Selective Secure Stream must use Route by ID (010b), where the Destination ID must contain the value in the Partner RID Base field of the associated Secure Stream RID Association Register set.
- Integrity Fail Messages associated with a Secure Link must use Route to Root Complex (000b); Integrity Sync Messages associated with a Selective Secure Stream must use Route by ID (010b), where the Destination ID must contain the value in the Partner RID Base field of the associated Secure Stream RID Association Register set.
- IDE Messages use the default Traffic Class designator (TC0). Receivers that implement IDE support are permitted to check for violations of this rule. If a Receiver determines that a TLP violates this rule, it must handle the TLP as an Unsupported Request. This is a reported error associated with the Receiving Port. Table 5 provides example encoding for IDE messages.

**Table 5. IDE Messages**

| Name | Code[7:0] (b) | | Routing r[2:0] (b) | | Type | Support¹ | | | | Description/Comments |
|---|---|---|---|---|---|---|---|---|---|---|
| | | | | | | RC | Ep | Sw | Br | |
| Integrity | 0101 | | 010/ | | Msg | tr | tr | tr | | Integrity Sync |
| Sync | 0100 | | 100 | | | | | | | |
| Integrity | 0101 | | 000 / | | Msg | tr | tr | tr | | Integrity check fail |
| Fail | 0101 | | 010 | | | | | | | |
| | | Notes: | | | | | | | | |
| | | | | 1. Support for these messages is required when the optional IDE mechanism is implemented | | | | | | |

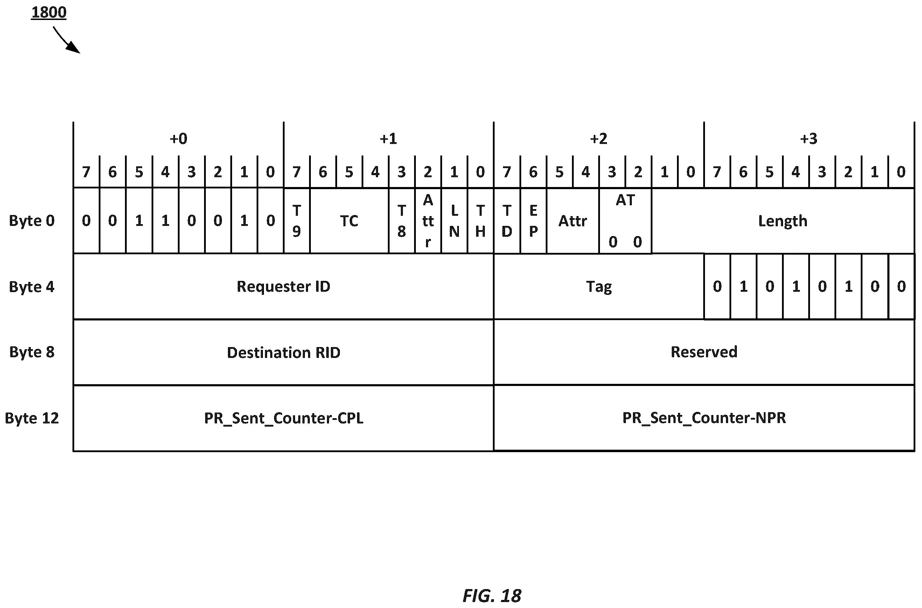

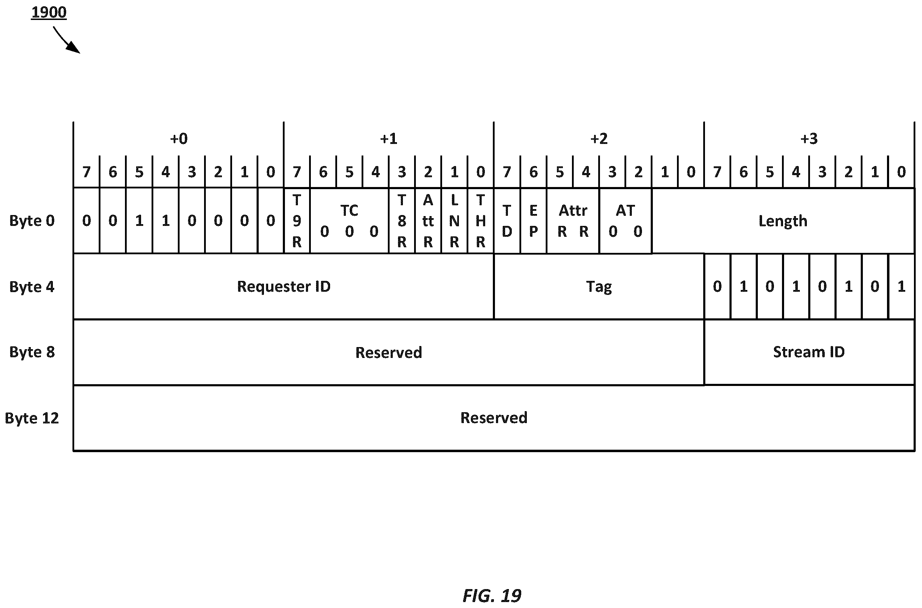

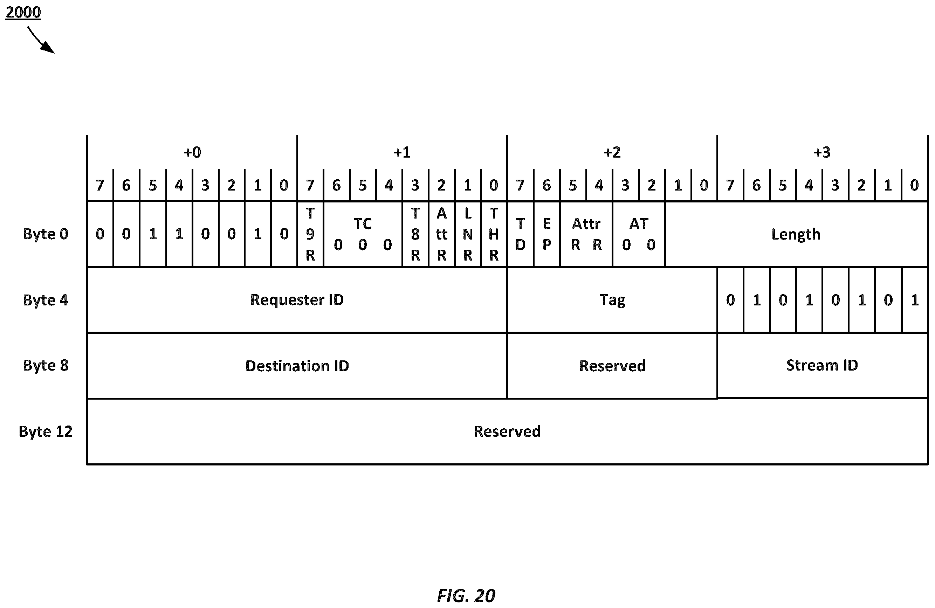

FIG. 17 is a schematic diagram of an example integrity sync message for a secure link in accordance with embodiments of the present disclosure. FIG. 18 is a schematic diagram of an integrity sync message for a Selective secure stream in accordance with embodiments of the present disclosure. FIG. 19 is a schematic diagram of an integrity check fail message for a secure link in accordance with embodiments of the present disclosure. FIG. 20 is a schematic diagram of an integrity check fail message for a Selective secure stream in accordance with embodiments of the present disclosure.

As shown in FIG. 17, Integrity Sync Messages associated with a Secure Link may use Local routing (100b). As shown in FIG. 18, Integrity Sync Messages associated with a Selective Secure Stream may use Route by ID (010b), where the Destination ID may contain the value in the Partner RID Base field of the associated Secure Stream RID Association Register set. As shown in FIG. 19, Integrity Fail Messages associated with a Secure Link may use Route to Root Complex (000b). As shown in FIG. 20, Integrity Sync Messages associated with a Selective Secure Stream may use Route by ID (010b), where the Destination ID may contain the value in the Partner RID Base field of the associated Secure Stream RID Association Register set.

IDE Message may use the default Traffic Class designator (TC0). Receivers that implement IDE support are permitted to check for violations of this rule. If a Receiver determines that a TLP violates this rule, it may handle the TLP as an Unsupported Request. This is a reported error associated with the Receiving Port.

### Switch Rules for Flow-Through Secure Streams

A Switch is permitted to support Flow-Through Secure Streams without supporting Secure Streams for cases where a Switch Port itself is a terminal.

Switches that support Flow-Through Secure Streams must, when enabled, implement modified ordering rules for TLPs with the Secure TLP Prefix that pass through the Switch, as defined in Table 6. Although Switches must not reorder TLPs with the Secure TLP Prefix based on Relaxed Ordering, it is permitted for those TLPs to have the RO bit Set.

IDO is not affected because Secure Streams always operates in pairwise connections, independent of other traffic.

**Table 6. IDE Ordering Rules for Switches - Per Stream**

| Row Pass Column | | Posted Request | Non-Posted Request | | Completion |
|---|---|---|---|---|---|
| | | | Read Rqst | NPR with Data | |
| Posted Request | | No | Yes | Yes | a) Y/N |
| | | | | | b) Yes |
| Non-posted Request | Read Rqst | No | No | No | Y/N |
| | NPR with Data | No | No | No | Y/N |
| Completion | | No | | Yes | No |

Switches must only route Secure TLPs through Ports with the Flow-Through Secure Stream Enabled bit Set. If a Secure TLP is routed to a Port with the Flow-Through Secure Stream Enabled bit Clear, the Secure TLP must be discarded by the Switch, and this is a Misrouted Secure TLP error, which is a defined error associated with the Egress Port. In some embodiments, the Egress Port can synthesize and return a Completion when discarding a Non-Posted Request TLP.

### IDE Extended Capability

All Ports that implement IDE must implement the IDE Extended Capability.

### Extended Capability Header (Offset 00h)

Table EC1 below provides the respective bit definitions in the PCI Express Extended Capability Header.

**Table EC1: PCle Extended Capability Header.**

| Bit Location | Register Description | Attributes |
|---|---|---|
| 15:0 | PCI Express Extended Capability ID-Set to <TBD> to indicate IDE Extended Capability | Hwlnit |
| 19:16 | Capability Version-This field is a PCI-SIG defined version number that indicates the version of the Capability structure present. | Hwlnit |
| | Must be 1h for this version of the specification. | |
| 31:20 | Next Capability Offset-This field contains the offset to the next PCI Express Extended Capability structure or 000h if no other items exist in the linked list of Capabilities. | Hwlnit |

### IDE Capability Register (Offset 04h)

**Table EC2: IDE Capability Register:**

| Bit Location | Register Description | Attributes |
|---|---|---|
| 0 | Secure Link Supported - When Set, indicates that the Port support Secure Links, and that the Secure Link Control and Status Registers (below) immediately follow the IDE Status Register. | Hwlnit / RsvdP |
| 1 | Selective Secure Streams Supported - When Set, indicates that the Port support Selective Secure Streams | Hwlnit / RsvdP |
| 2 | Flow-Through Secure Stream Supported - For a Switch Port, when Set indicates support for passing IDE Connections to other Switch Ports. | Hwlnit / RsvdP |
| | It is permitted to support Flow-Through Secure Stream without supporting Secure Link or Selective Secure Stream | |
| 10:8 | Supported Integrity Types - Indicates the types of Integrity supported. | Hwlnit |
| | 000b - No Integrity | |
| | 001b - Per-TLP 96b GMAC | |
| | 010b - Aggregated GMAC | |
| | Others - Reserved | |
| 15:13 | Supported Encryption Types - Indicates the types of Encryption supported. | Hwlnit |
| | 000b - No Encryption | |
| | 001b - 256b AES-CTR for TLP Payloads | |
| | Others - Reserved | |
| 23:16 | Number of Secure Streams Supported - | Hwlnit / RsvdP |
| | If Selective Secure Streams Supported is Set then this field indicates number of Secure Streams Supported such that 0=1 Stream. | |
| | A corresponding number of Secure Stream Register blocks must be implemented. If Secure Link Supported is Clear, then these blocks must immediately follow the IDE Status Register. If Secure Link Supported is Set, then these blocks must immediately follow the Secure Link Control and Status Registers. | |
| | The value is undefined if Selective Secure Streams Supported is Clear. | |

### IDE Control Register (Offset 08h)

**Table EC3: IDE Control Register**

| Bit Location | Register Description | Attributes |
|---|---|---|
| 1 | Secure Streams Global Enable - Enables the use of Selective Secure Streams (Secure Streams with Stream ID >0). | RW |
| 2 | Flow-Through Secure Stream Enabled - For Switch Ports and Root Ports, Enables the Port for flow-through operation of Secure Stream. | RW / RsvdP |
| | Reserved for other types of Ports. | |

### IDE Status Register (Offset 0Ch)

**Table EC2: IDE Status Register**

| Bit Location | Register Description | Attributes |
|---|---|---|
| 0 | Received Integrity Check Fail Message - For a Downstream Port, when Set, indicates that one or more Integrity Check Fail Message(s) have been Received. | RW1C / RsvdZ |
| | Reserved for Upstream Ports. | |
| 1 | Integrity Check Fail Message Overflow - For a Downstream Port, when Set, indicates that one or more Integrity Check Fail Message(s) have been Received while the Received Integrity Check Fail Message bit was Set. | RW1C / RsvdZ |
| | Reserved for Upstream Ports. | |
| 31:24 | Integrity Check Fail Stream ID - For a Downstream Port, when Received Integrity Check Fail Message bit is Set, contains the Stream ID in the Recieved Integrity Check Fail Message that caused Received Integrity Check Fail Message to transition from Clear to Set. | RO |
| | Value is undefined when Received Integrity Check Fail Message is Clear. | |
| | Reserved for Upstream Ports. | |

### Secure Link Control Register (Offset 10h, if present)

If the Secure Link Supported bit in the IDE Capability Register is Set, then this register must be implemented. If the Secure Link Supported bit in the IDE Capability Register is Clear, then this register must not be implemented, and instead the first set of Secure Stream registers must follow the IDE Status Register.

**Table EC5: Secure Link Control Register**

| Bit Location | Register Description | | Attributes |
|---|---|---|---|
| 0 | Secure Link On - For a Downstream Port, when Set, enables Secure Link. | | RW / RsvdP |
| | It is permitted for the default value to be 1b if and only if implementation-specific means can ensure that the Secure Link will start in the Ready_Insecure state. | | |
| | Reserved for Upstream Ports. | | |
| 1 | Trigger Integrity Check - When an aggraged MAC mode is enabled, writing a 1b to this bit must cause the Port to Transmit an Integrity Sync Message for this Secure Stream. Read value must be 1b following the write of a 1b until the Integrity Sync Message has been Transmitted, at which time this bit must be Cleared. | | RW |
| | RsvdP if no aggregated MAC mode is supported. | | |
| 6:4 | Integrity Mode - Configures the type of Integrity to be used for this Secure Stream. Must be programmed to the same value in both the Upstream and Downstream Ports. Must be configured while Secure Link On is Clear. When Secure Link On is Set, the setting is sampled, and this field becomes RO with reads returning the sampled value. | | RW/RO |
| | | 000b - No Integrity | |
| | | 001b - Per-TLP 96b GMAC | |
| | | 010b - Aggregated GMAC | |
| | | Others - Reserved | |
| 10:8 | Encryption Mode - Configures the type of Encryption to be used for this Secure Stream. Must be programmed to the same value in both the Upstream and Downstream Ports. Must be configured while Secure Link On is Clear. When Secure Link On is Set, the setting is sampled, and this field becomes RO with reads returning the sampled value. | | RW/RO |
| | 000b - No Encryption | | |
| | 001b - 256b AES-CTR for TLP Payloads | | |
| | Others - Reserved | | |
| 14:12 | Containment Behavior - Configures the action of the Port when in Fail-Insecure. It is permitted to program different values in the Upstream and Downstream Ports. Must be configured while Secure Link On is Clear. When Secure Link On is Set, the setting is sampled, and this field becomes RO with reads returning the sampled value. | | RW/RO |
| | | 000b - Force Link Down | |
| | | 001b - Block Memory Requests and Completsions - Requests must be terminated as Unsupported Requests, Completions must be dropped | |
| | | 011b - Block all Requests and Completions - Requests must be terminated as Unsupported Requests, Completions must be dropped | |
| | | 001b - Block Memory and IO - Requests UR'd, Completions dropped | |
| | | 010b - Block Memory, IO and Cfg except through SFI | |
| | Others - Reserved; If a Reserved Value is written to this field, the hardware must instead write this field to Force Link Down (000b) | | |
| 23:16 | Encryption Key ID - Indicates the Key ID associated with the Secure Link for the purpose of encrypting and decrypting data payloads. This Key ID association is local to the Port. | | RW |
| 31:24 | MAC Key ID - Indicates the Key ID associated with the Secure Link for the purpose of computing and checking the MAC. This Key ID association is local to the Port. | | RW |

### Secure Link Status Register (Offset 14h, if present)

If the Secure Link Supported bit in the IDE Capability Register is Set, then this register must be implemented. If the Secure Link Supported bit in the IDE Capability Register is Clear, then this register must not be implemented, and instead the first set of Secure Stream registers must follow the IDE Status Register.

**Table EC6: Secure Link Status Register**

| Bit Location | Register Description | | Attributes |
|---|---|---|---|
| 3:0 | Secure Link State - When Secure Link On is Set, this field indicates the state of the Port. Encodings: | | RO |
| | | 0000b - Start / Unknown | |
| | | 0001b - Ready_Insecure | |
| | | 0010b - Secure | |
| | | 0011b - Key_Refresh | |
| | | 1000b - Fail_Insecure | |
| | Others - Reserved - Software must handle reserved values as indicating unknown state | | |
| | When Secure Link On is Clear, the value of this field must be 0000b. | | |

### Secure Stream Control Register

Each Secure Stream must have exactly one Secure Stream register block, where the block consists of a Secure Stream Control Register, followed by a Secure Stream Status Register, followed by a Secure Stream RID Association Register, followed by one or more Secure Stream Address Association Register sets. The Secure Stream ID associated with a Secure Stream Register block is implied by the sequence in which the block appears in the IDE Extended Capability such that the first corresponds to Secure Stream ID 1 (Stream ID 0 is associated with a Secure Link and does not use RID or Address Association mechanisms).

**Table EC7: Secure Stream Control Register**

| Bit Location | Register Description | | Attributes |
|---|---|---|---|
| 0 | Secure Stream Enable - When Set, enables this Secure Stream. The following must be programmed before this bit is Set: | | RW |
| | | • Integrity Mode (below) | |
| | | • Encryption Mode (below) | |
| | | • Containment Behavior (below) | |
| | | • Key ID (below) | |
| | | • Requester ID Limit in Secure Stream RID | |
| | | Association Register 1 | |
| | | • Requester ID Base in Secure Stream RID | |
| | | Association Register 2 | |
| | | • V bit in Secure Stream RID Association Register 2 | |
| | If this bit is Set when the V bit is Clear, the Secure Stream must transition to Fail_Insecure. | | |
| | It is strongly recommended that the Secure Stream Address Association Registers also be programmed prior to Setting this bit. | | |
| | Default value is 0b. | | |
| 1 | Trigger Integrity Check - When an aggraged MAC mode is enabled, writing a 1b to this bit must cause the Port to Transmit an Integrity Sync Message for this Secure Stream. Read value must be 1b following the write of a 1b until the Integrity Sync Message has been Transmitted, at which time this bit must be Cleared. | | RW |
| | RsvdP if no aggregated MAC mode is supported. | | |
| 6:4 | Integrity Mode - Configures the type of Integrity to be used for this Secure Stream. Must be programmed to the same value in both the Upstream and Downstream Ports. Must be configured while Secure Stream Enable is Clear. When Secure Stream Enable is Set, the setting is sampled, and this field becomes RO with reads returning the sampled value. | | RW/RO |
| | | 000b - No Integrity | |
| | | 001b - Per-TLP 96b GMAC | |
| | | 010b - Aggregated GMAC | |
| | | Others - Reserved | |
| 10:8 | Encryption Mode - Configures the type of Encryption to be used for this Secure Stream. Must be programmed to the same value in both the Upstream and Downstream Ports. Must be configured while Secure Stream Enable is Clear. When Secure Stream Enable is Set, the setting is sampled, and this field becomes RO with reads returning the sampled value. | | RW/RO |
| | 000b - No Encryption | | |
| | 001b - 256b AES-CTR for TLP Payloads | | |
| | Others - Reserved | | |
| 14:12 | Containment Behavior - Configures the action of the Port for this Secure Stream when in Fail-Insecure. It is permitted to program different values in the Upstream and Downstream Ports. Must be configured while Secure Stream Enable is Clear. When Secure Stream Enable is Set, the setting is sampled, and this field becomes RO with reads returning the sampled value. | | RW/RO |
| | | 000b - No Containment | |
| | | 001b - Block Memory Requests and Completsions for this Secure Stream - Requests must be terminated as Unsupported Requests, Completions must be dropped | |
| | | 011b - Block all Requests and Completions for this Secure Stream - Requests must be terminated as Unsupported Requests, Completions must be dropped | |
| | | Others - Reserved; If a Reserved Value is written to this field, the must instead write this field to Block all Requests and Completions (011b). | |
| 23:16 | Encryption Key ID - Indicates the Key ID associated with the Secure Link for the purpose of encrypting and decrypting data payloads. This Key ID association is local to the Port. | | RW |
| 31:24 | MAC Key ID - Indicates the Key ID associated with the Secure Link for the purpose of computing and checking the MAC. This Key ID association is local to the Port. | | RW |

### Secure Stream Status Register

Each Secure Stream must have exactly one Secure Stream register block, where the block consists of a Secure Stream Control Register, followed by a Secure Stream Status Register, followed by a Secure Stream RID Association Register, followed by one or more Secure Stream Address Association Register sets. The Secure Stream ID associated with a Secure Stream Register block is implied by the sequence in which the block appears in the IDE Extended Capability such that the first corresponds to Secure Stream ID 1 (Stream ID 0 is associated with a Secure Link and does not use RID or Address Association mechanisms).

**Table EC8: Secure Stream Status Register**

| Bit Location | Register Description | | Attributes |
|---|---|---|---|
| 3:0 | Secure Stream State - When Secure Stream Enable is Set, this field indicates the state of the Secure Stream at this Port. Encodings: | | RO |
| | | 0000b - Start / Unknown | |
| | | 0001b - Ready_Insecure | |
| | | 0010b - Secure | |
| | | 0011b - Key_Refresh | |
| | | 1000b - Fail_Insecure | |
| | Others - Reserved - Software must handle reserved values as indicating unknown state | | |
| | When Secure Link On is Clear, the value of this field must be 0000b. | | |

### Secure Stream RID Association Register

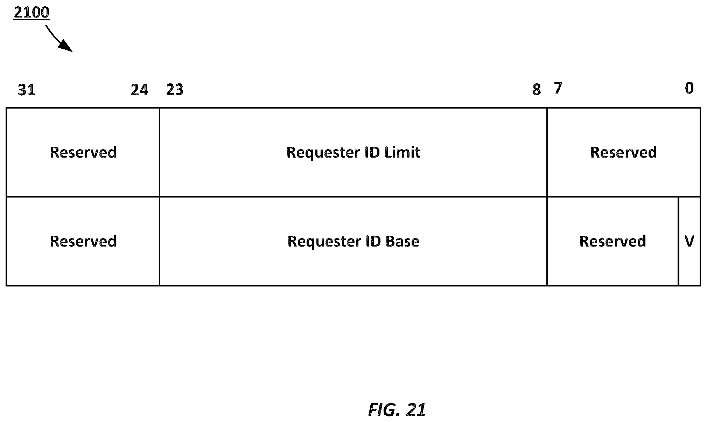

Each Secure Stream must have exactly one Secure Stream register block, where the block consists of a Secure Stream Control Register, followed by a Secure Stream Status Register, followed by a Secure Stream RID Association Register, followed by one or more Secure Stream Address Association Register sets. The Secure Stream ID associated with a Secure Stream Register block is implied by the sequence in which the block appears in the IDE Extended Capability such that the first corresponds to Secure Stream ID 1 (Stream ID 0 is associated with a Secure Link and does not use RID or Address Association mechanisms). FIG. 21 is a schematic diagram of an example secure stream requester identifier (RID) association block in accordance with embodiments of the present disclosure. Table EC9 provides an example secure stream RID association register 1. Table EC10 provides an example secure stream RID association register 2.

**Table EC9. Secure Stream RID Association Register 1 (Offset +00h)**

| Bit Location | Register Description | Attributes |
|---|---|---|
| 23:8 | Requester ID Limit- Indicates the highest value RID in the range associated with this Key ID | RW |

**Table EC10. Secure Stream RID Association Register 2 (Offset +04h)**

| Bit Location | Register Description | Attributes |
|---|---|---|
| 23:8 | Requester ID Base - Indicates the lowest value RID in the range associated with this Key ID | RW |
| 0 | Valid (V) - When Set, indicates the Requester ID Base and Requester ID Limit fields have been programmed. Default is 0b | RW |

### Secure Stream Address Association Registers

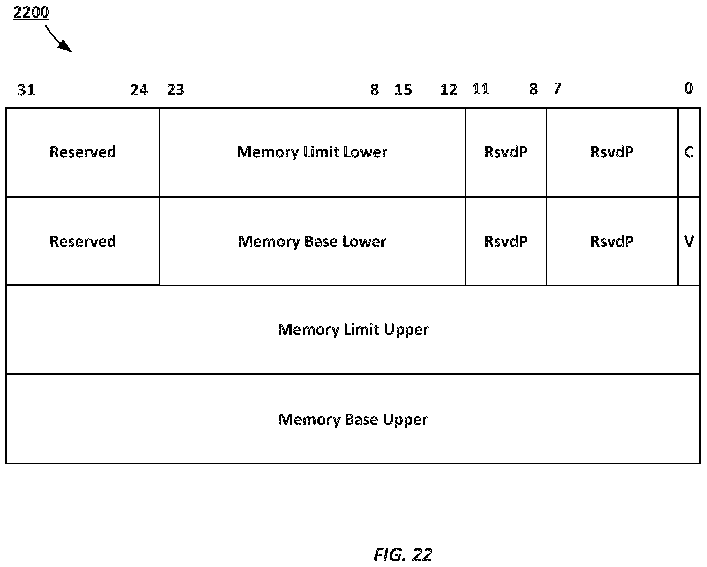

There must be at least one Secure Stream Address Association Block following each Secure Stream RID Association Block. The number of Secure Stream Address Association Block for a given Secure Stream is determined by hardware implementation. System Software must Clear the V bit for all unused Secure Stream Address Association Blocks. FIG. 22 is a schematic diagram of an example secure stream address association block in accordance with embodiments of the present disclosure. Table EC11 provides an example secure stream address association register 1. Table EC12 provides an example secure stream address association register 2. Table 13 provides an example secure stream address association register 3. Table EC14 provides an example secure stream address association register 4.

**Table EC11. Secure Stream Address Association Register 1 (Offset +00h)**

| Bit Location | Register Description | Attributes |
|---|---|---|
| 23:8 | Memory Limit Lower - Corresponds to Address bits [31:20]. Address bits [19:0] are implicitly F_FFFFh. | RW |
| 0 | C (Continuation) - If Set, indicates that an additional Secure Stream Address Association Block for the same Secure Stream follows this one; if Clear indicates that this is the final Secure Stream Address Association Block for this Secure Stream. | Hwlnit |

**Table EC12. Secure Stream Address Association Register 2 (Offset +04h)**

| Bit Location | Register Description | Attributes |
|---|---|---|
| 23:8 | Memory Base Lower - Corresponds to Address bits [31:20]. Address[19:0] bits are implicitly 0_0000h. | RW |
| 0 | V (Valid) - When Set, indicates this Secure Stream Association Block is valid, and that all Address Routed TLPs matching the address range defined by Memory Base and Memory Limit must be associated with this Secure Stream. | RW |
| | Hardware behavior is undefined if overlapping address ranges are assigned for different Secure Streams. | |
| | Default is 0b | |

**Table EC13. Secure Stream Address Association Register 3 (Offset +08h)**

| Bit Location | Register Description | Attributes |
|---|---|---|
| 31:0 | Memory Limit Upper - Corresponds to Address bits [63:32] | RW |

**Table EC14. Secure Stream Address Association Register 4 (Offset +0ch)**

| Bit Location | Register Description | Attributes |
|---|---|---|
| 31:0 | Memory Base Upper - Corresponds to Address bits [63:32] | RW |

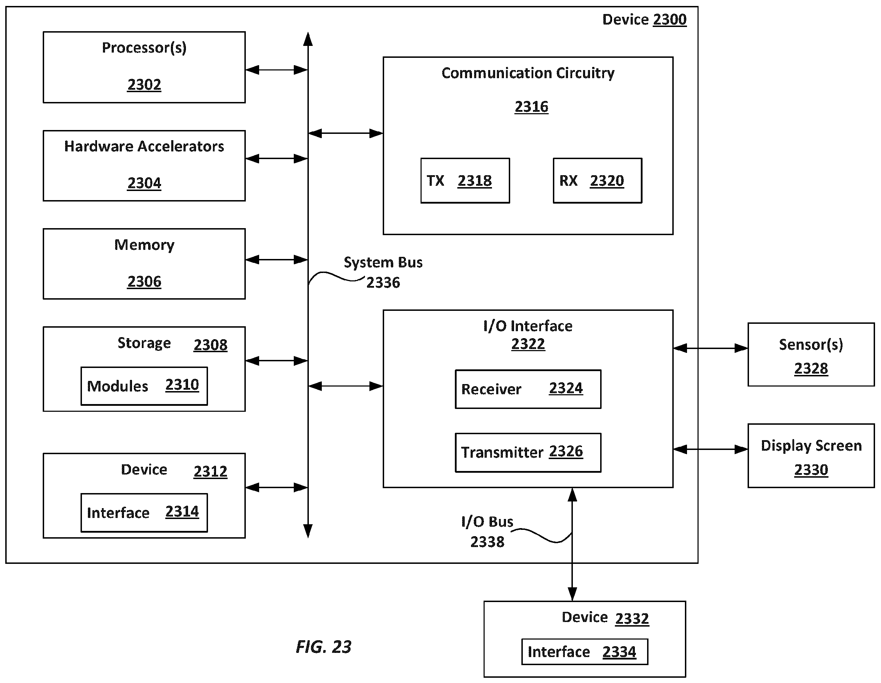

FIG. 23 illustrates an example device suitable for use to practice various aspects of the present disclosure, in accordance with various embodiments. The device 2300 may be used to implement programmatic aspects of the disclosed methodology. As shown, the device 2300 may include one or more processors 2302, each having one or more processor cores, or and optionally, a hardware accelerator 2304 (which may be an ASIC or a FPGA). In alternate embodiments, the hardware accelerator 2304 may be part of processor 2302, or integrated together on a SOC. Additionally, the device 2300 may include a memory 2306, which may be any one of a number of known persistent storage media, and a data storage circuitry 2308 including modules 2310. In addition, the device 2300 may include an I/O interface 2322, coupled to one or more sensors 2328, and a display screen 2330. The I/O interface 2322 may include a transmitter 2326 and a receiver 2324. Furthermore, the device 2300 may include communication circuitry 2316 including a transmitter (Tx) 2318, and network interface controller (NIC) 2320. The elements may be coupled to each other via system bus 2336, which may represent one or more buses, e.g., one or more PCle buses. For various PCle embodiments, communication circuitry 2316 and I/O interface 2322 may respectively include transmitter 2318 and NIC 2320, and transmitter 2326 and receiver 2324. In particular, respective transmitter 2318, NIC 2320, transmitter 2326, and receiver 2324 may include the flip-based packetization technology described herein with references to the figures. In various embodiments, one or more of the other components, such as processor 2302, memory 2306, storage2308 and so forth, may also likewise includes high speed serial link interface circuitry for coupling and operating with a high speed serial bus 2336, e.g., high speed PCle bus, having the secure stream technology described herein with references to the figures. In the case of multiple buses, they may be bridged by one or more bus bridges (not shown). A device 2312 may be coupled to the system bus 2336, and a device 2332 may be coupled to an I/O bus 2338. The device 2312 may include an interface 2314, and the device 2332 may include an interface 2334.

In embodiments, the processor(s) 2302 (also referred to as "processor circuitry 2302") may be one or more processing elements configured to perform basic arithmetical, logical, and input/output operations by carrying out instructions. Processor circuitry 2302 may be implemented as a standalone system/device/package or as part of an existing system/device/package. The processor circuitry 2302 may be one or more microprocessors, one or more single-core processors, one or more multi-core processors, one or more multithreaded processors, one or more GPUs, one or more ultra-low voltage processors, one or more embedded processors, one or more DSPs, one or more FPDs (hardware accelerators) such as FPGAs, structured ASICs, programmable SoCs (PSoCs), etc., and/or other processor or processing/controlling circuit. The processor circuitry 2302 may be a part of a SoC in which the processor circuitry 2302 and other components discussed herein are formed into a single IC or a single package. As examples, the processor circuitry 2302 may include one or more Intel Pentium^{®}, Core^{®}, Xeon^{®}, Atom^{®}, or Core M^{®} processor(s); Advanced Micro Devices (AMD) Accelerated Processing Units (APUs), Epyc^{®}, or Ryzen^{®} processors; Apple Inc. A series, S series, W series, etc. processor(s); Qualcomm snapdragon^{®} processor(s); Samsung Exynos^{®} processor(s); and/or the like.

In embodiments, the processor circuitry 2302 may include a sensor hub, which may act as a coprocessor by processing data obtained from the one or more sensors 2328. The sensor hub may include circuitry configured to integrate data obtained from each of the one or more sensors 2328 by performing arithmetical, logical, and input/output operations. In embodiments, the sensor hub may capable of timestamping obtained sensor data, providing sensor data to the processor circuitry 2302 in response to a query for such data, buffering sensor data, continuously streaming sensor data to the processor circuitry 2302 including independent streams for each sensor of the one or more sensors 2328, reporting sensor data based upon predefined thresholds or conditions/triggers, and/or other like data processing functions.

In embodiments, the memory 2306 (also referred to as "memory circuitry 2306" or the like) may be circuitry configured to store data or logic for operating the computer device 2300. The memory circuitry 2306 may include a number of memory devices that may be used to provide for a given amount of system memory. As examples, the memory circuitry 2306 can be any suitable type, number and/or combination of volatile memory devices (e.g., random access memory (RAM), dynamic RAM (DRAM), static RAM (SRAM), etc.) and/or non-volatile memory devices (e.g., read-only memory (ROM), erasable programmable read-only memory (EPROM), electrically erasable programmable read-only memory (EEPROM), flash memory, antifuses, etc.) that may be configured in any suitable implementation as are known. In various implementations, individual memory devices may be formed of any number of different package types, such as single die package (SDP), dual die package (DDP) or quad die package, dual inline memory modules (DIMMs) such as microDIMMs or MiniDIMMs, and/or any other like memory devices. To provide for persistent storage of information such as data, applications, operating systems and so forth, the memory circuitry 2306 may include one or more mass-storage devices, such as a solid state disk drive (SSDD); flash memory cards, such as SD cards, microSD cards, xD picture cards, and the like, and USB flash drives; on-die memory or registers associated with the processor circuitry 2302 (for example, in low power implementations); a micro hard disk drive (HDD); three dimensional cross-point (3D XPOINT) memories from Intel^{®} and Micron^{®}, etc.

Where FPDs are used, the processor circuitry 2302 and memory circuitry 2306 (and/or data storage circuitry 2308) may comprise logic blocks or logic fabric, memory cells, input/output (I/O) blocks, and other interconnected resources that may be programmed to perform various functions of the example embodiments discussed herein. The memory cells may be used to store data in lookup-tables (LUTs) that are used by the processor circuitry 2302 to implement various logic functions. The memory cells may include any combination of various levels of memory/storage including, but not limited to, EPROM, EEPROM, flash memory, SRAM, anti-fuses, etc.

In embodiments, the data storage circuitry 2308 (also referred to as "storage circuitry 2308" or the like), with shared or respective controllers, may provide for persistent storage of information such as modules 2310, operating systems, etc. The data storage circuitry 2308 may be implemented as solid state drives (SSDs); solid state disk drive (SSDD); serial AT attachment (SATA) storage devices (e.g., SATA SSDs); flash drives; flash memory cards, such as SD cards, microSD cards, xD picture cards, and the like, and USB flash drives; three-dimensional cross-point (3D Xpoint) memory devices; on-die memory or registers associated with the processor circuitry 2302; hard disk drives (HDDs); micro HDDs; resistance change memories; phase change memories; holographic memories; or chemical memories; among others. As shown, the data storage circuitry 2308 is included in the computer device 2300; however, in other embodiments, the data storage circuitry 2308 may be implemented as one or more devices separated from the other elements of computer device 2300.

In some embodiments, the data storage circuitry 2308 may include an operating system (OS) (not shown), which may be a general purpose operating system or an operating system specifically written for and tailored to the computer device 2300. The OS may include one or more drivers, libraries, and/or application programming interfaces (APIs), which provide program code and/or software components for modules 2310 and/or control system configurations to control and/or obtain/process data from the one or more sensors 2328.

The modules 2310 may be software modules/components used to perform various functions of the computer device 2300 and/or to carry out functions of the embodiments discussed herein. In embodiments where the processor circuitry 2302 and memory circuitry 2306 include hardware accelerators (e.g., FPGA cells, the hardware accelerator 2304) as well as processor cores, the hardware accelerators (e.g., the FPGA cells) may be pre-configured (e.g., with appropriate bit streams, logic blocks/fabric, etc.) with the logic to perform at least some functions of the embodiments herein (in lieu of employment of programming instructions to be executed by the processor core(s)). For example, the modules 2310 may comprise logic for the corresponding entities discussed with regard to the display screen 2330, an on-screen input device, the on-screen input interface controller 2318, an off-screen input device, the transmitter 2326, and the receiver 2324.

The components of computer device 2300 may communicate with one another over the system bus 2336. The system bus 2336 may include any number of technologies, such as a Local Interconnect Network (LIN); industry standard architecture (ISA); extended ISA (EISA); PCI; PCI extended (PCIx); PCle; an Inter-Integrated Circuit (I2C) bus; a Parallel Small Computer System Interface (SPI) bus; Common Application Programming Interface (CAPI); point to point interfaces; a power bus; a proprietary bus, for example, Intel^{®} Ultra Path Interface (UPI), Intel^{®} Accelerator Link (IAL), or some other proprietary bus used in a SoC based interface; or any number of other technologies. In some embodiments, the system bus 2336 may be a controller area network (CAN) bus system, a Time-Trigger Protocol (TTP) system, or a FlexRay system, which may allow various devices (e.g., the one or more sensors 2328, etc.) to communicate with one another using messages or frames.

The communications circuitry 2316 may include circuitry for communicating with a wireless network or wired network. For example, the communication circuitry 2316 may include transceiver (Tx) 2318 and network interface controller (NIC) 2320. Communications circuitry 2316 may include one or more processors (e.g., baseband processors, modems, etc.) that are dedicated to a particular wireless communication protocol.

NIC 2320 may be included to provide a wired communication link to a network and/or other devices. The wired communication may provide an Ethernet connection, an Ethernet-over-USB, and/or the like, or may be based on other types of networks, such as DeviceNet, ControlNet, Data Highway+, PROFIBUS, or PROFINET, among many others. An additional NIC 2320 may be included to allow connection to a second network (not shown) or other devices, for example, a first NIC 2320 providing communications to the network 150 over Ethernet, and a second NIC 2320 providing communications to other devices over another type of network, such as a personal area network (PAN) including a personal computer (PC) device. In some embodiments, the various components of the device 2300, such as the one or more sensors 2328, etc. may be connected to the processor(s) 2302 via the NIC 2320 as discussed above rather than via the I/O circuitry 2322 as discussed infra.

The Tx 2318 may include one or more radios to wirelessly communicate with a network and/or other devices. The Tx 2318 may include hardware devices that enable communication with wired networks and/or other devices using modulated electromagnetic radiation through a solid or non-solid medium. Such hardware devices may include switches, filters, amplifiers, antenna elements, and the like to facilitate the communications over the air (OTA) by generating or otherwise producing radio waves to transmit data to one or more other devices, and converting received signals into usable information, such as digital data, which may be provided to one or more other components of computer device 2300. In some embodiments, the various components of the device 2300, such as the one or more sensors 2328, etc. may be connected to the device 2300 via the Tx 2318 as discussed above rather than via the I/O circuitry 2322 as discussed infra. In one example, the one or more sensors 2328 may be coupled with device 2300 via a short range communication protocol.

The Tx 2318 may include one or multiple radios that are compatible with any number of 3GPP (Third Generation Partnership Project) specifications, notably Long Term Evolution (LTE), Long Term Evolution-Advanced (LTE-A), Long Term Evolution-Advanced Pro (LTE-A Pro), and Fifth Generation (5G) New Radio (NR). It can be noted that radios compatible with any number of other fixed, mobile, or satellite communication technologies and standards may be selected. These may include, for example, any Cellular Wide Area radio communication technology, which may include e.g. a 5G communication systems, a Global System for Mobile Communications (GSM) radio communication technology, a General Packet Radio Service (GPRS) radio communication technology, or an Enhanced Data Rates for GSM Evolution (EDGE) radio communication technology. Other Third Generation Partnership Project (3GPP) radio communication technology that may be used includes UMTS (Universal Mobile Telecommunications System), FOMA (Freedom of Multimedia Access), 3GPP LTE (Long Term Evolution), 3GPP LTE Advanced (Long Term Evolution Advanced), 3GPP LTE Advanced Pro (Long Term Evolution Advanced Pro)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-SCDMA (Time Division - Synchronous Code Division Multiple Access), 3GPP Rel. 8 (Pre-4G) (3rd Generation Partnership Project Release 8 (Pre-4th Generation)), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP LTE Extra, LTE Licensed-Assisted Access (LAA), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard)), Wireless Gigabit Alliance (WiGig) standard, mmWave standards in general (wireless systems operating at 10-90 GHz and above such as WiGig, IEEE 802.11ad, IEEE 802.11ay, and the like. In addition to the standards listed above, any number of satellite uplink technologies may be used for the uplink transceiver, including, for example, radios compliant with standards issued by the ITU (International Telecommunication Union), or the ETSI (European Telecommunications Standards Institute), among others. The examples provided herein are thus understood as being applicable to various other communication technologies, both existing and not yet formulated. Implementations, components, and details of the aforementioned protocols may be those known in the art and are omitted herein for the sake of brevity.

The input/output (I/O) interface 2322 may include circuitry, such as an external expansion bus (e.g., Universal Serial Bus (USB), FireWire, Thunderbolt, PCI/PCIe/PCIx, etc.), used to connect computer device 2300 with external components/devices, such as one or more sensors 2328, etc. I/O interface circuitry 2322 may include any suitable interface controllers and connectors to interconnect one or more of the processor circuitry 2302, memory circuitry 2306, data storage circuitry 2308, communication circuitry 2316, and the other components of computer device 2300. The interface controllers may include, but are not limited to, memory controllers, storage controllers (e.g., redundant array of independent disk (RAID) controllers, baseboard management controllers (BMCs), input/output controllers, host controllers, etc. The connectors may include, for example, busses (e.g., bus 2336), ports, slots, jumpers, interconnect modules, receptacles, modular connectors, etc. The I/O circuitry 2322 may couple the device 2300 with the one or more sensors 2328, etc. via a wired connection, such as using USB, FireWire, Thunderbolt, RCA, a video graphics array (VGA), a digital visual interface (DVI) and/or mini-DVI, a high-definition multimedia interface (HDMI), an S-Video, and/or the like.

The one or more sensors 2328 may be any device configured to detect events or environmental changes, convert the detected events into electrical signals and/or digital data, and transmit/send the signals/data to the computer device 2300. Some of the one or more sensors 2328 may be sensors used for providing computer-generated sensory inputs. Some of the one or more sensors 2328 may be sensors used for motion and/or object detection. Examples of such one or more sensors 2328 may include, inter alia, charged-coupled devices (CCD), Complementary metal-oxide-semiconductor (CMOS) active pixel sensors (APS), lens-less image capture devices/cameras, thermographic (infrared) cameras, Light Imaging Detection And Ranging (LIDAR) systems, and/or the like. In some implementations, the one or more sensors 2328 may include a lens-less image capture mechanism comprising an array of aperture elements, wherein light passing through the array of aperture elements define the pixels of an image. In embodiments, the motion detection one or more sensors 2328 may be coupled with or associated with light generating devices, for example, one or more infrared projectors to project a grid of infrared light onto a scene, where an infrared camera may record reflected infrared light to compute depth information.

Some of the one or more sensors 2328 may be used for position and/or orientation detection, ambient/environmental condition detection, and the like. Examples of such one or more sensors 2328 may include, inter alia, microelectromechanical systems (MEMS) with piezoelectric, piezoresistive and/or capacitive components, which may be used to determine environmental conditions or location information related to the computer device 2300. In embodiments, the MEMS may include 3-axis accelerometers, 3-axis gyroscopes, and/or magnetometers. In some embodiments, the one or more sensors 2328 may also include one or more gravimeters, altimeters, barometers, proximity sensors (e.g., infrared radiation detector(s) and the like), depth sensors, ambient light sensors, thermal sensors (thermometers), ultrasonic transceivers, and/or the like.

Each of these elements, e.g., one or more processors 2302, the hardware accelerator 2304, the memory 2306, the data storage circuitry 2308 including the modules 2310, the input/output interface 2322, the one or more sensors 2328, the communication circuitry 2316 including the Tx 2318, the NIC 2320, the system bus 2336, the I/O bus 2338, the device 2312, the device 2332, may perform its conventional functions known in the art. In addition, they may be employed to store and host execution of programming instructions implementing various operating system functions and/or applications, in particular, operations associated with secure stream technology described above with references to the FIGURES. The various elements may be implemented by assembler instructions supported by processor(s) 2302 or high-level languages, such as, for example, C, that can be compiled into such instructions. Operations associated with the device 2300 not implemented in software may be implemented in hardware, e.g., via hardware accelerator 2304, and/or firmware.

The number, capability and/or capacity of these elements 2302-2338 may vary, depending on the number of other devices the device 2300 is configured to support. Otherwise, the constitutions of elements 2302-2338 are known, and accordingly will not be further described.

As will be appreciated by one skilled in the art, the present disclosure may be embodied as methods or computer program products. Accordingly, the present disclosure, in addition to being embodied in hardware as earlier described, may take the form of an entirely software embodiment (including firmware, resident software, micro-code, etc.) or an embodiment combining software and hardware aspects that may all generally be referred to as a "circuit," "module," or "system."

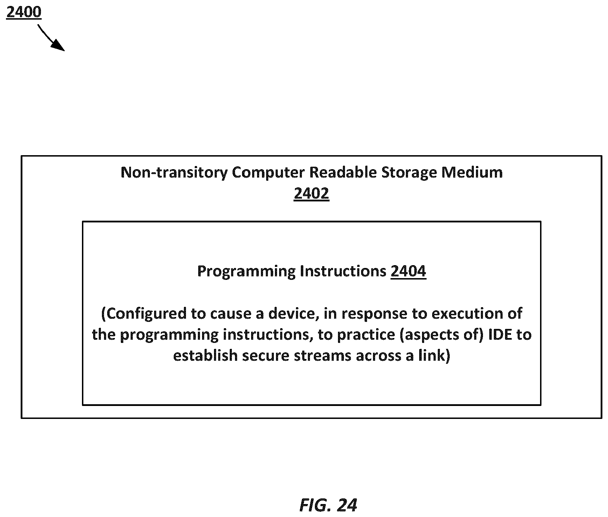

Furthermore, the present disclosure may take the form of a computer program product embodied in any tangible or non-transitory medium of expression having computer-usable program code embodied in the medium. FIG. 24 illustrates an example computer-readable non-transitory storage medium 2400 that may be suitable for use to store instructions that cause an apparatus, in response to execution of the instructions by the apparatus, to practice selected aspects of the present disclosure. As shown, non-transitory computer-readable storage medium 2402 may include a number of programming instructions 2404 (also referred to herein as 'instructions'). Programming instructions 2404 may be configured to enable a device, e.g., device 2300, in response to execution of the programming instructions, to perform, e.g., various programming operations associated with operating system functions and/or applications, in particular, operations associated with secure stream technology described above with references to the figures.

In alternate embodiments, programming instructions 2404 may be disposed on multiple computer-readable non-transitory storage media 2402 instead. In alternate embodiments, programming instructions 2404 may be disposed on computer-readable transitory storage media 2402, such as, signals. Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

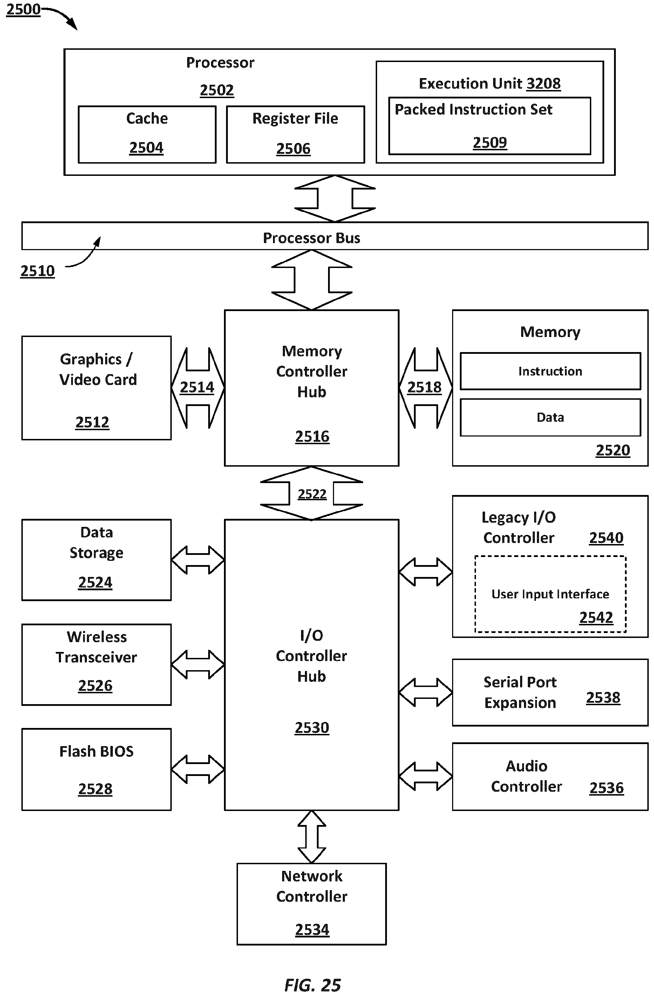

FIG. 25 is a block diagram that illustrates another embodiment of a computing system including a processor according to one or more embodiments. System 2500 includes a component, such as a processor 2502 to employ execution units including logic to perform algorithms for process data, in accordance with the present disclosure, such as in the embodiment described herein. System 2500 is representative of processing systems based on the PENTIUM III^{™}, PENTIUM 4^{™}, Xeon^{™}, Itanium, XScale^{™} and/or StrongARM^{™} microprocessors available from Intel Corporation of Santa Clara, California, although other systems (including PCs having other microprocessors, engineering workstations, set-top boxes and the like) may also be used. In one embodiment, sample system 2500 executes a version of the WINDOWS^{™} operating system available from Microsoft Corporation of Redmond, Washington, although other operating systems (UNIX and Linux for example), embedded software, and/or graphical user interfaces, may also be used. Thus, embodiments of the present disclosure are not limited to any specific combination of hardware circuitry and software.

Embodiments are not limited to computer systems. Alternative embodiments of the present disclosure can be used in other devices such as handheld devices and embedded applications. Some examples of handheld devices include cellular phones, Internet Protocol devices, digital cameras, personal digital assistants (PDAs), and handheld PCs. Embedded applications can include a micro controller, a digital signal processor (DSP), system on a chip (SoC), network computers (NetPC), set-top boxes, network hubs, wide area network (WAN) switches, or any other system that can perform one or more instructions in accordance with at least one embodiment.

In this illustrated embodiment, processor 2502 includes one or more execution units 2508 to implement an algorithm that is to perform at least one instruction. One embodiment may be described in the context of a single processor desktop or server system, but alternative embodiments may be included in a multiprocessor system. System 2500 is an example of a 'hub' system architecture. The computer system 2500 includes a processor 2502 to process data signals. The processor 2502, as one illustrative example, includes a complex instruction set computer (CISC) microprocessor, a reduced instruction set computing (RISC) microprocessor, a very long instruction word (VLIW) microprocessor, a processor implementing a combination of instruction sets, or any other processor device, such as a digital signal processor, for example. The processor 2502 is coupled to a processor bus 2510 that transmits data signals between the processor 2502 and other components in the system 2500. The elements of system 2500 (e.g. a graphics accelerator 2512, a memory controller hub 2516, memory 2520, I/O a controller hub 2530, a wireless transceiver 2526, a Flash BIOS 2528, a network controller 2534, an audio controller 2536, a serial expansion port 2538, a legacy I/O controller 2540 with a user input interface 2542, etc.) perform their conventional functions that are well known to those familiar with the art.

In one embodiment, the processor 2502 includes a Level 1 (L1) internal cache memory 2504. Depending on the architecture, the processor 2502 may have a single internal cache or multiple levels of internal caches. Other embodiments include a combination of both internal and external caches depending on the particular implementation and needs. Register file 2506 is to store different types of data in various registers including integer registers, floating point registers, vector registers, banked registers, shadow registers, checkpoint registers, status registers, and instruction pointer register.

Execution unit 2508, including logic to perform integer and floating point operations, also resides in the processor 2502. The processor 2502, in one embodiment, includes a microcode (µcode) ROM to store microcode, which when executed, is to perform algorithms for certain macroinstructions or handle complex scenarios. Here, microcode is potentially updateable to handle logic bugs/fixes for processor 2502. For one embodiment, execution unit 2508 includes logic to handle a packed instruction set 2509. By including the packed instruction set 2509 in the instruction set of a general-purpose processor 2502, along with associated circuitry to execute the instructions, the operations used by many multimedia applications may be performed using packed data in a general-purpose processor 2502. Thus, many multimedia applications are accelerated and executed more efficiently by using the full width of a processor's data bus for performing operations on packed data. This potentially eliminates the need to transfer smaller units of data across the processor's data bus to perform one or more operations, one data element at a time.

Alternate embodiments of an execution unit 2508 may also be used in micro controllers, embedded processors, graphics devices, DSPs, and other types of logic circuits. System 2500 includes a memory 2520. Memory 2520 includes a dynamic random access memory (DRAM) device, a static random access memory (SRAM) device, flash memory device, or other memory device. Memory 2520 stores instructions and/or data represented by data signals that are to be executed by the processor 2502.

Note that any of the aforementioned features or aspects of the embodiments described herein may be utilized on one or more interconnects illustrated in FIG. 25. For example, an on-die interconnect (ODI), which is not shown, for coupling internal units of processor 2502 implements one or more aspects of the embodiments described above. Or the embodiments are associated with a processor bus 2510 (e.g. Intel Quick Path Interconnect (QPI) or other known high performance computing interconnect), a high bandwidth memory path 2518 to memory 2520, a point-to-point link to graphics accelerator 2512 (e.g. a Peripheral Component Interconnect express (PCle) compliant fabric), a controller hub interconnect 2522, an I/O or other interconnect (e.g. USB, PCI, PCle) for coupling the other illustrated components. Some examples of such components include the audio controller 2536, firmware hub (flash BIOS) 2528, wireless transceiver 2526, data storage 2524, legacy I/O controller 2540 containing user input and keyboard interfaces 2542, serial expansion port 2538 such as Universal Serial Bus (USB), and network controller 2534. The data storage device 2524 can comprise a hard disk drive, a floppy disk drive, a CD-ROM device, a flash memory device, or other mass storage device.

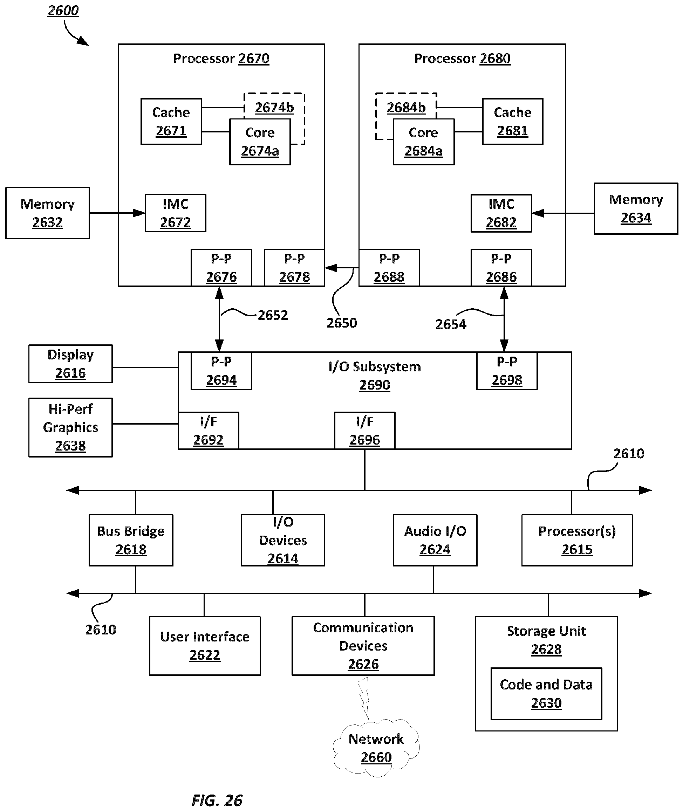

FIG. 26 is a block diagram of an example computer architecture 2600 according to at least one embodiment of the present disclosure according to one or more embodiments. FIG. 26 illustrates another computing system 2600 that is arranged in a point-to-point (PtP) configuration according to an embodiment, where one or more interconnects implement one or more features in accordance with at least one embodiment of the present disclosure. In particular, FIGURE 26 shows a system where processors, memory, and input/output devices are interconnected by a number of point-to-point interfaces. Generally, one or more of the computing systems or computing devices described herein may be configured in the same or similar manner as computing system 2600.

Processors 2670 and 2680 may be implemented as single core processors 2674a and 2684a or multi-core processors 2674a-2674b and 2684a-2684b. Processors 2670 and 2680 may each include a cache 2671 and 2681 used by their respective core or cores. A shared cache (not shown) may be included in either processors or outside of both processors yet connected with the processors via P-P interconnect, such that either or both processors' local cache information may be stored in the shared cache if a processor is placed into a low power mode.

Processors 2670 and 2680 may also each include integrated memory controller logic (MC) 2672 and 2682 to communicate with memory elements 2632 and 2634, which may be portions of main memory locally attached to the respective processors. In alternative embodiments, memory controller logic 2672 and 2682 may be discrete logic separate from processors 2670 and 2680. Memory elements 2632 and/or 2634 may store various data to be used by processors 2670 and 2680 in achieving operations and functionality outlined herein.

Processors 2670 and 2680 may be any type of processor, such as those discussed in connection with other figures. Processors 2670 and 2680 may exchange data via a point-to-point (PtP) interface 2650 using point-to-point interface circuits 2678 and 2688, respectively. Processors 2670 and 2680 may each exchange data with an input/output (I/O) subsystem 2690 via individual point-to-point interfaces 2652 and 2654 using point-to-point interface circuits 2676, 2686, 2694, and 2698. I/O subsystem 2690, which may be a chipset in at least one embodiment, may exchange data with a high-performance graphics circuit 2638 via a high-performance graphics interface 2639, using an interface circuit 2692, which could be a PtP interface circuit. In one embodiment, the high-performance graphics circuit 2638 is a special-purpose processor, such as, for example, a high-throughput MIC processor, a network or communication processor, compression engine, graphics processor, GPGPU, embedded processor, or the like. I/O subsystem 2690 may also communicate with a display 2616 for displaying data that is viewable by a human user. In alternative embodiments, any or all of the PtP links illustrated in FIG. 26 could be implemented as a multi-drop bus rather than a PtP link.

I/O subsystem 2690 may be in communication with a bus 2610 via an interface circuit 2696. Bus 2610 may have one or more devices that communicate over it, such as a bus bridge 2618 and I/O devices 2614. Via a bus 2610, bus bridge 2618 may be in communication with other devices such as a user interface 2622 (such as a keyboard, mouse, touchscreen, or other input devices), communication devices 2626 (such as modems, network interface devices, or other types of communication devices that may communicate through a computer network 2660), audio I/O devices 2624, and/or a data storage device 2628. Data storage device 2628 may store code and data 2630, which may be executed by processors 2670 and/or 2680. In alternative embodiments, any portions of the bus architectures could be implemented with one or more PtP links.

The computer system depicted in FIG. 26 is a schematic illustration of an embodiment of a computing system that may be utilized to implement various embodiments discussed herein. It will be appreciated that various components of the system depicted in FIG. 26 may be combined in a system-on-a-chip (SoC) architecture or in any other suitable configuration capable of achieving the functionality and features of examples and implementations provided herein.

Computer program code for carrying out at least some of the operations of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means that implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, apparatuses, computer-readable media, methods and computer program products according to various embodiments of the present disclosure. In this regard, each block in the flowchart or block diagrams may represent a module, segment, or portion of code and/or hardware, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

One or more embodiments may be implemented as a computer process, a computing system, or as an article of manufacture such as a computer program product of computer readable media. The computer program product may be a computer storage medium readable by a computer system and encoding a computer program instructions for executing a computer process.

The corresponding structures, material, acts, and equivalents of all means or steps plus function elements in the claims below are intended to include any structure, material or act for performing the function in combination with other claimed elements that are specifically claimed. The description of the present disclosure has been presented for purposes of illustration and description but is not intended to be exhaustive or limited to the disclosure in the form disclosed. Many modifications and variations will be apparent to those of ordinary skill without departing from the scope and spirit of the disclosure. The embodiments are chosen and described in order to best explain the principles of the disclosure and the practical application, and to enable others of ordinary skill in the art to understand the disclosure for embodiments with various modifications as are suited to the particular use contemplated.

The foregoing description of one or more implementations provides illustration and description but is not intended to be exhaustive or to limit the scope of embodiments to the precise form disclosed. Modifications and variations are possible in light of the above teachings or may be acquired from practice of various embodiments.

## Claims

1. An apparatus comprising:
transaction layer logic (660a) comprising hardware circuitry to:
determine that a packet is to traverse to a link partner on a secure stream;
authenticate a receiving port of the link partner;
form a transaction layer packet, TLP, using data payload and a header;
configure a prefix of the TLP to identify the TLP as a secure TLP;
associate the TLP with the secure stream to form the secure TLP, wherein to associate the TLP with the secure stream comprises to associate the TLP with a secure stream number, the secure stream number encoded into the prefix of the TLP;
apply integrity protection and data encryption to the secure TLP, wherein the data payload of the TLP is encrypted and the integrity protection is applied to the secure TLP; and
transmit the secure TLP across the secure stream to the link partner,
wherein the apparatus further comprises transaction layer logic circuitry to:
augment the TLP with an information indicating that the TLP comprises integrity protection and data encryption, wherein the information is contained in one of the prefix of the TLP or the header of the TLP,
wherein the information comprises an L bit that when set indicates that the TLP is a last secure TLP on the secure stream and that subsequent TLPs received on the secure stream are to have a new encryption key set.

2. The apparatus of claim 1, wherein the secure stream number is unique to the secure stream.

3. The apparatus of claim 1, further comprising an encryption engine (664) comprising hardware circuitry to encrypt the data payload of the TLP, wherein the encryption engine (664) uses an encryption standard based on an American Encryption Standard Galois counter mode, AES-GCM, encryption protocol.

4. The apparatus of claim 1, further comprising a data integrity protection engine (662) comprising hardware circuitry to implement data integrity protection to the TLP, wherein the data integrity protection engine (662) uses an integrity protocol based on an American Encryption Standard Galois Counter Mode, AES-GCM, protocol.

5. The apparatus of claim 1, wherein the secure stream comprises one or more substreams, the one or more secure substreams comprising a secure substream for posted requests, non-posted requests, or completions;
wherein the apparatus comprises transaction layer logic circuitry to:
construct an initialization vector, IV, that includes a fixed field unique to a device and an invocation field unique to data to be transmitted.

6. The apparatus of claim 5, wherein the IV comprises a 96b IV and wherein:
the fixed field is in bits 95:64 of the IV, wherein bits 95:92 comprise a fixed value indicating the substream; and
the invocation field is in bits 63:0 of the IV, containing the value of a linear feedback shift register with taps at positions 64, 63, 61 and 60, initially set to the value 0000_0001h.

7. A method (1000) comprising:
determining, by logic circuitry at a transaction layer of a protocol stack of a device, that a packet is to traverse to a link partner on a secure stream (1002);
authenticating a receiving port of the link partner;
forming a transaction layer packet, TLP, using data payload and a header (1004);
configuring a prefix of the TLP to identify the TLP as a secure TLP (1006);
associating the TLP with the secure stream to form the secure TLP (1008), wherein associating the TLP with the secure stream (1008) comprises associating the TLP with a secure stream number, the secure stream number encoded into the prefix of the TLP;
applying integrity protection and data encryption to the secure TLP (1010, 1012), wherein the data payload of the TLP is encrypted and the integrity protection is applied to the secure TLP; and
transmitting the secure TLP across the secure stream to the link partner,
wherein the method further comprises:
augmenting, by transaction layer logic circuitry, to the TLP with an information indicating that the TLP comprises integrity protection and data encryption, wherein the information is contained in one of the prefix of the TLP or the header of the TLP,
wherein the information comprises an L bit that when set indicates that the TLP is a last secure TLP on the secure stream and that subsequent TLPs received on the secure stream are to have a new encryption key set.

8. The method (1000) of claim 7, further comprising:
associating the secure stream with an authentication key; and
associating the authentication key with a key identifier, Key ID, the Key ID unique to each of data encryption and integrity protection.

9. The method (1000) of claim 7, wherein the secure stream number is unique to the secure stream.

10. The method (1000) of claim 7, wherein the data encryption or the integrity protection is performed using Advanced Encryption Standard Galois Counter mode, AES-GCM, encryption.

## Patentansprüche

1. Einrichtung, umfassend:
Transaktionsschichtlogik (660a), die eine Hardwareschaltungsanordnung für Folgendes umfasst:
Bestimmen, dass ein Paket auf einem sicheren Datenstrom an einen Verbindungspartner übertragen werden soll;
Authentifizieren eines Empfangsports des Verbindungspartners;
Bilden eines Transaktionsschichtpakets, TLP, unter Verwendung einer Datennutzlast und eines Headers;
Konfigurieren eines Präfixes des TLP, um das TLP als ein sicheres TLP zu identifizieren;
Zuordnen des TLP zu dem sicheren Datenstrom, um das sichere TLP zu bilden, wobei das Zuordnen des TLP zu dem sicheren Datenstrom Zuordnen des TLP zu einer Nummer des sicheren Datenstrom umfasst, wobei die Nummer des sicheren Datenstroms in das Präfix des TLP codiert ist;
Anwenden von Integritätsschutz und Datenverschlüsselung auf das sichere TLP, wobei die Datennutzlast des TLP verschlüsselt ist und der Integritätsschutz auf das sichere TLP angewendet wird; und
Übertragen des sicheren TLP über den sicheren Datenstrom an den Verbindungspartner,
wobei die Einrichtung ferner eine Transaktionsschichtlogik-Schaltungsanordnung für Folgendes umfasst:
Erweitern des TLP mit Informationen, die angeben, dass das TLP Integritätsschutz und Datenverschlüsselung umfasst, wobei die Informationen in einem von dem Präfix des TLP oder dem Header des TLP enthalten sind,
wobei die Informationen ein L-Bit umfassen, das, wenn gesetzt, angibt, dass das TLP ein letztes sicheres TLP auf dem sicheren Datenstrom ist und dass nachfolgende TLPs, die auf dem sicheren Datenstrom empfangen werden, einen neuen Verschlüsselungsschlüssel festgelegt aufweisen müssen.

2. Einrichtung nach Anspruch 1, wobei die Nummer des sicheren Datenstroms für den sicheren Datenstrom eindeutig ist.

3. Einrichtung nach Anspruch 1, ferner umfassend eine Verschlüsselungs-Engine (664), die eine Hardwareschaltungsanordnung zum Verschlüsseln der Datennutzlast des TLP umfasst, wobei die Verschlüsselungs-Engine (664) einen Verschlüsselungsstandard basierend auf einem Verschlüsselungsprotokoll des American Encryption Standard Galois Counter Mode, AES-GCM, verwendet.

4. Einrichtung nach Anspruch 1, ferner umfassend eine Datenintegritätsschutz-Engine (662), die eine Hardwareschaltungsanordnung zum Implementieren eines Datenintegritätsschutzes für das TLP umfasst, wobei die Datenintegritätsschutz-Engine (662) ein Integritätsprotokoll basierend auf einem Protokoll des American Encryption Standard Galois Counter Mode, AES-GCM, verwendet.

5. Einrichtung nach Anspruch 1, wobei der sichere Datenstrom einen oder mehrere Teil-Datenströme umfasst, wobei der eine oder die mehreren sicheren Teil-Datenströme einen sicheren Teil-Datenstrom für gepostete Anforderungen, nicht gepostete Anforderungen oder Abschlüsse umfassen;
wobei die Einrichtung eine Transaktionsschichtlogik-Schaltungsanordnung für Folgendes umfasst:
Erstellen eines Initialisierungsvektors, IV, der ein für eine Vorrichtung eindeutiges festes Feld und ein für zu übertragende Daten eindeutiges Aufruffeld aufweist.

6. Einrichtung nach Anspruch 5, wobei der IV einen 96b-IV umfasst und wobei:
das feste Feld sich in Bits 95:64 des IV befindet, wobei Bits 95:92 einen festen Wert umfassen, der den Teil-Datenstrom angibt; und
das Aufruffeld sich in Bits 63:0 des IV befindet, die den Wert eines linear rückgekoppelten Schieberegisters mit Abgriffen an den Positionen 64, 63, 61 und 60 enthalten, der anfänglich auf den Wert 0000_0001h gesetzt ist.

7. Verfahren (1000), umfassend:
Bestimmen durch eine Logikschaltungsanordnung auf einer Transaktionsschicht eines Protokollstapels einer Vorrichtung, dass ein Paket auf einem sicheren Datenstrom an einen Verbindungspartner übertragen werden soll (1002);
Authentifizieren eines Empfangsports des Verbindungspartners;
Bilden eines Transaktionsschichtpakets, TLP, unter Verwendung einer Datennutzlast und eines Headers (1004);
Konfigurieren eines Präfixes des TLP, um das TLP als ein sicheres TLP zu identifizieren (1006);
Zuordnen des TLP zu dem sicheren Datenstrom, um das sichere TLP zu bilden (1008), wobei das Zuordnen des TLP zu dem sicheren Datenstrom (1008) Zuordnen des TLP zu einer Nummer des sicheren Datenstroms umfasst, wobei die Nummer des sicheren Datenstroms in das Präfix des TLP codiert ist;
Anwenden von Integritätsschutz und Datenverschlüsselung auf das sichere TLP (1010, 1012), wobei die Datennutzlast des TLP verschlüsselt ist und der Integritätsschutz auf das sichere TLP angewendet wird; und
Übertragen des sicheren TLP über den sicheren Datenstrom an den Verbindungspartner,
wobei das Verfahren ferner Folgendes umfasst:
Erweitern des TLP durch eine Transaktionsschichtlogik-Schaltungsanordnung mit Informationen, die angeben, dass das TLP Integritätsschutz und Datenverschlüsselung umfasst, wobei die Informationen in einem von dem Präfix des TLP oder dem Header des TLP enthalten sind,
wobei die Informationen ein L-Bit umfassen, das, wenn gesetzt, angibt, dass das TLP ein letztes sicheres TLP auf dem sicheren Datenstrom ist und dass nachfolgende TLPs, die auf dem sicheren Datenstrom empfangen werden, einen neuen Verschlüsselungsschlüssel festgelegt aufweisen müssen.

8. Verfahren (1000) nach Anspruch 7, ferner umfassend:
Zuordnen des sicheren Datenstroms zu einem Authentifizierungsschlüssel; und
Zuordnen des Authentifizierungsschlüssels zu einer Schlüsselkennung, Schlüssel-ID, wobei die Schlüssel-ID für jede von der Datenverschlüsselung und dem Integritätsschutz eindeutig ist.

9. Verfahren (1000) nach Anspruch 7, wobei die Nummer des sicheren Datenstroms für den sicheren Datenstrom eindeutig ist.

10. Verfahren (1000) nach Anspruch 7, wobei die Datenverschlüsselung oder der Integritätsschutz unter Verwendung von Verschlüsselung mittels Advanced Encryption Standard Galois Counter Mode, AES-GCM, durchgeführt wird.

## Revendications

1. Appareil, comprenant :
une logique de couche transaction (660a) comprenant des circuits matériels pour :
déterminer qu'un paquet doit être acheminé vers un partenaire de liaison sur un flux sécurisé ;
authentifier un port de réception du partenaire de liaison ;
former un paquet de couche transaction, noté TLP, en utilisant une charge utile de données et un en-tête ;
configurer un préfixe du TLP pour identifier le TLP comme un TLP sécurisé ;
associer le TLP au flux sécurisé pour former le TLP sécurisé, l'association du TLP au flux sécurisé comprenant l'association du TLP à un numéro de flux sécurisé, le numéro de flux sécurisé étant codé dans le préfixe du TLP ;
appliquer une protection de l'intégrité et un chiffrement des données au TLP sécurisé, la charge utile de données du TLP étant chiffrée et la protection de l'intégrité étant appliquée au TLP sécurisé ; et
transmettre le TLP sécurisé via le flux sécurisé au partenaire de liaison,
l'appareil comprenant en outre des circuits logiques de couche transaction pour :
augmenter le TLP avec une information indiquant que le TLP comprend une protection de l'intégrité et un chiffrement des données, l'information étant contenue soit dans le préfixe du TLP soit dans l'en-tête du TLP, l'information comprenant un bit L qui, lorsqu'il est positionné, indique que le TLP est le dernier TLP sécurisé sur le flux sécurisé et que les TLP suivants reçus sur le flux sécurisé doivent être pourvus d'un nouvel ensemble de clés de chiffrement.

2. Appareil selon la revendication 1, dans lequel le numéro de flux sécurisé est propre au flux sécurisé.

3. Appareil selon la revendication 1, comprenant en outre un moteur de chiffrement (664) comprenant des circuits matériels pour chiffrer la charge utile de données du TLP, le moteur de chiffrement (664) utilisant une norme de chiffrement basée sur un protocole de chiffrement selon la Norme de Chiffrement Américain en mode Galois/compteur, notée AES-GCM.

4. Appareil selon la revendication 1, comprenant en outre un moteur de protection de l'intégrité des données (662) comprenant des circuits matériels pour mettre en œuvre une protection de l'intégrité des données sur le TLP, le moteur de protection de l'intégrité des données (662) utilisant un protocole d'intégrité basé sur un protocole selon la Norme de Chiffrement Américain en mode Galois/compteur, notée AES-GCM.

5. Appareil selon la revendication 1, dans lequel le flux sécurisé comprend un ou plusieurs sous-flux, les un ou plusieurs sous-flux sécurisés comprenant un sous-flux sécurisé pour des requêtes publiées, des requêtes non publiées, ou des achèvements ;
l'appareil comprenant des circuits logiques de couche transaction pour :
construire un vecteur d'initialisation, noté IV, qui comporte un champ fixe propre à un dispositif et un champ d'invocation propre aux données à transmettre.

6. Appareil selon la revendication 5, dans lequel l'IV comprend un IV 96b et dans lequel :
le champ fixe est compris dans les bits 95:64 de l'IV, les bits 95:92 comprenant une valeur fixe indiquant le sous-flux ; et
le champ d'invocation est compris dans les bits 63:0 de l'IV, contenant la valeur d'un registre à décalage à rétroaction linéaire avec des prises aux positions 64, 63, 61 et 60, initialement mis à la valeur 0000_0001h.

7. Procédé (1000), comprenant :
la détermination, par des circuits logiques au niveau d'une couche transaction d'une pile protocolaire d'un dispositif, qu'un paquet doit être acheminé vers un partenaire de liaison sur un flux sécurisé (1002) ;
l'authentification d'un port de réception du partenaire de liaison ;
la formation d'un paquet de couche transaction, noté TLP, en utilisant une charge utile de données et un en-tête (1004) ;
la configuration d'un préfixe du TLP pour identifier le TLP comme un TLP sécurisé (1006) ;
l'association du TLP au flux sécurisé pour former le TLP sécurisé (1008), l'association du TLP au flux sécurisé (1008) comprenant l'association du TLP à un numéro de flux sécurisé, le numéro de flux sécurisé étant codé dans le préfixe du TLP ;
l'application d'une protection de l'intégrité et d'un chiffrement des données au TLP sécurisé (1010, 1012), la charge utile de données du TLP étant chiffrée et la protection de l'intégrité étant appliquée au TLP sécurisé ; et
la transmission du TLP sécurisé via le flux sécurisé au partenaire de liaison,
le procédé comprenant en outre :
l'augmentation, par les circuits logiques de couche transaction, du TLP avec une information indiquant que le TLP comprend une protection de l'intégrité et un chiffrement des données, l'information étant contenue soit dans le préfixe du TLP soit dans l'en-tête du TLP, l'information comprenant un bit L qui, lorsqu'il est positionné, indique que le TLP est le dernier TLP sécurisé sur le flux sécurisé et que les TLP suivants reçus sur le flux sécurisé doivent être pourvus d'un nouvel ensemble de clés de chiffrement.

8. Procédé (1000) selon la revendication 7, comprenant en outre :
l'association du flux sécurisé à une clé d'authentification ; et
l'association de la clé d'authentification à un identifiant de clé, noté Key ID, le Key ID étant propre à la fois au chiffrement des données et à la protection de l'intégrité.

9. Procédé (1000) selon la revendication 7, dans lequel le numéro de flux sécurisé est propre au flux sécurisé.

10. Procédé (1000) selon la revendication 7, dans lequel le chiffrement des données ou la protection de l'intégrité s'effectue en utilisant un chiffrement selon la Norme de Chiffrement Avancé en mode Galois/compteur, notée AES-GCM.
